# EUROPEAN PATENT APPLICATION

(11) **EP 4 808 254 A1**
(43) Date of publication of application: **16.09.2026**
(21) Application number: 25736245.9
(22) Date of filing: 02.01.2025
(51) Int. Cl.: H04W 74/04, H04W 74/00, H04W 74/0816, H04W 72/0453, H04W 72/50, H04J 3/16, H04W 84/12

(54) **BANDWIDTH EXTENSION IN MULTI-AP COOPERATION IN WIRELESS LAN SYSTEM**

(30) Priority: 03.01.2024 KR 20240001091; 03.01.2024 KR 20240001096
(71) Applicant: LG Electronics Inc., Yeongdeungpo-gu Seoul 07336 (KR)
(72) Inventor: KIM, Geonhwan, Seoul 06772 (KR); CHOI, Jinsoo, Seoul 06772 (KR); JANG, Insun, Seoul 06772 (KR); BAEK, Sunhee, Seoul 06772 (KR); YOON, Yelin, Seoul 06772 (KR); CHA, Dongju, Seoul 06772 (KR)
(74) Representative: Mooser, Sebastian Thomas
(86) International application number: PCT/KR2025/000027
(87) International publication number: WO 2025/147091

(57) **Abstract**

The present disclosure relates to bandwidth extension in multi-AP cooperation in a wireless LAN system. According to embodiments of the present disclosure, a method performed by a first AP in a wireless LAN system comprises the steps of receiving, from a second AP, information about an available bandwidth of the second AP; transmitting, to the second AP, information about an available bandwidth of the first AP, wherein the available bandwidth of the first AP is greater than the available bandwidth of the second AP; receiving, from the second AP, a transmission opportunity (TXOP) sharing frame including information about an allocation interval within a period of a TXOP obtained for the available bandwidth of the second AP: and on the basis of at least one subchannel outside of the available bandwidth of the second AP being in an idle state within the available bandwidth of the first AP, transmitting a frame in the allocation interval through an extended bandwidth including the at least one subchannel and the available bandwidth of the second AP for which the TXOP is obtained.

## Description

### Technical field

The present disclosure is related to a bandwidth expansion in multi-AP coordination in a wireless local area network (WLAN) system.

### Background Art

Next-generation Wi-Fi (e.g., IEEE 802.11be and/or later) aims to support ultra-high reliability in signaling to STAs, and various technologies are being considered to support high throughput, low latency, and extended range. For example, since APs participating in multi-AP coordination belong to different BSSs, BSS operating channel widths (or, available bandwidths) may be different from each other. In this case, since an efficiency of a transmission based on multi-AP coordination may decrease, a bandwidth extension may be considered.

### Disclosure of Invention

### Technical Problem

An aspect of the present disclosure is to provide method and apparatus for a bandwidth expansion in multi-AP coordination in a WLAN system.

### Solution to Problem

According to an embodiment of the present disclosure, a method performed by a first AP in a wireless LAN system comprises: receiving, from a second AP, information for an available bandwidth of the second AP; transmitting, to the second AP, information for an available bandwidth of the first AP, wherein the available bandwidth of the first AP is larger than the available bandwidth of the second AP; receiving, from the second AP, a TXOP sharing frame comprising information for an allocation duration within a duration of a transmission opportunity (TXOP) obtained for the available bandwidth of the second AP; and based on at least one subchannel other than the available bandwidth of the second AP being in an idle state within the available bandwidth of the first AP, transmitting a frame in the allocation duration through an expanded bandwidth comprising the at least one subchannel and the available bandwidth of the second AP for which the TXOP is obtained.

According to an embodiment of the present disclosure, a method performed by a second AP in a wireless LAN system comprises: transmitting, to a first AP, information for an available bandwidth of the second AP; receiving, from the first AP, information for an available bandwidth of the first AP, wherein the available bandwidth of the first AP is larger than the available bandwidth of the second AP; determining whether at least one subchannel other than the available bandwidth of the second AP is in an idle state within the available bandwidth of the first AP; and based on the at least one subchannel being in an idle state, transmitting, to the first AP, a TXOP sharing frame comprising information for an allocation duration within a duration of a transmission opportunity (TXOP) obtained for the available bandwidth of the second AP through an expanded bandwidth comprising the at least one subchannel and the available bandwidth of the second AP.

In various embodiments, apparatuses implementing the above methods are provided.

### Advantageous Effect

The present disclosure may have various advantageous effects.

For example, through the bandwidth expansion methods proposed in the present disclosure, the DAP may quickly perform a frame exchange using the expanded bandwidth during the allocated time.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### Brief Description of Drawings

FIG. 1 illustrates an example of a transmitting apparatus and/or receiving apparatus of the present disclosure.
FIG. 2 is a conceptual view illustrating the structure of a wireless local area network (WLAN).
FIG. 3 illustrates a general link setup process.
FIG. 4 illustrates an example of a multi-link (ML).
FIG. 5 illustrates a modified example of a transmitting device and/or a receiving device of the present disclosure.
FIG. 6 illustrates an example of a physical protocol data unit or physical layer (PHY) protocol data unit (PPDU) transmitted/received by an STA of the present disclosure.
FIG. 7 illustrates the layout of resource units (RUs) used for a 20 MHz PPDU.
FIG. 8 illustrates the layout of resource units (RUs) used for 40MHz PPDU.
FIG. 9 illustrates the layout of resource units (RUs) used for an 80MHz PPDU.
FIG. 10 illustrates an operation related to UL-MU.
FIG. 11 illustrates an example of channels used/supported/defined within the 2.4 GHz band.
FIG. 12 illustrates an example of channels used/supported/defined within the 5 GHz band.
FIG. 13 illustrates an example of channels used, supported, and defined within the 6 GHz band.
FIG. 14 shows an example of a random backoff procedure.
FIG. 15 illustrates an example of a procedure related to NAV setting.
FIG. 16 illustrates a trigger frame format.
FIG. 17 illustrates an example of the User Info field format of the MU-RTS TXS TF.
FIG. 18 shows an example of an operation diagram of single TXOP-based coordinated time division multiple access (Co-TDMA) between coordinating APs.
FIG. 19 shows an example of a two TXOP-based coordinated time division multiple access (Co-TDMA) operation between coordination APs.
FIG. 20 shows an example of a case where BSS operating channel widths are different among coordination APs.
FIG. 21 shows an example of a method performed by a first AP for a bandwidth expansion in multi-AP coordination according to an embodiment of the present disclosure.
FIG. 22 shows an example of a method performed by a second AP for a bandwidth expansion in multi-AP coordination according to an embodiment of the present disclosure.
FIG. 23 shows an example of a bandwidth expansion procedure of an SAP when a backoff is not performed in Co-TDMA according to an embodiment of the present disclosure.
FIG. 24 shows an example of a bandwidth expansion procedure of an SAP when a backoff is performed in Co-TDMA according to an embodiment of the present disclosure.
FIG. 25 shows a first example of a bandwidth expansion procedure of a DAP when a backoff is not performed in Co-TDMA according to an embodiment of the present disclosure.
FIG. 26 shows a second example of a bandwidth expansion procedure of a DAP when a backoff is not performed in Co-TDMA according to an embodiment of the present disclosure.
FIG. 27 shows an example of a bandwidth expansion procedure of a DAP when a backoff is performed in Co-TDMA according to an embodiment of the present disclosure.
FIG. 28 shows an example of a bandwidth expansion procedure upon an MU-RTS TXS TF/CTS frame exchange in Co-TDMA based on two TXOPs according to an embodiment of the present disclosure.
FIG. 29 shows an example of a bandwidth expansion procedure of a DAP upon an MU-RTS TXS TF/CTS-to-self frame exchange in Co-TDMA based on two TXOPs according to an embodiment of the present disclosure.
FIG. 30 shows an example of a bandwidth expansion procedure of a DAP when a backoff is performed in Co-TDMA based on two TXOPs according to an embodiment of the present disclosure.
FIG. 31 shows an example of a bandwidth expansion procedure of a DAP when a backoff is not performed in Co-TDMA based on two TXOPs according to an embodiment of the present disclosure.

### Mode for the Invention

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

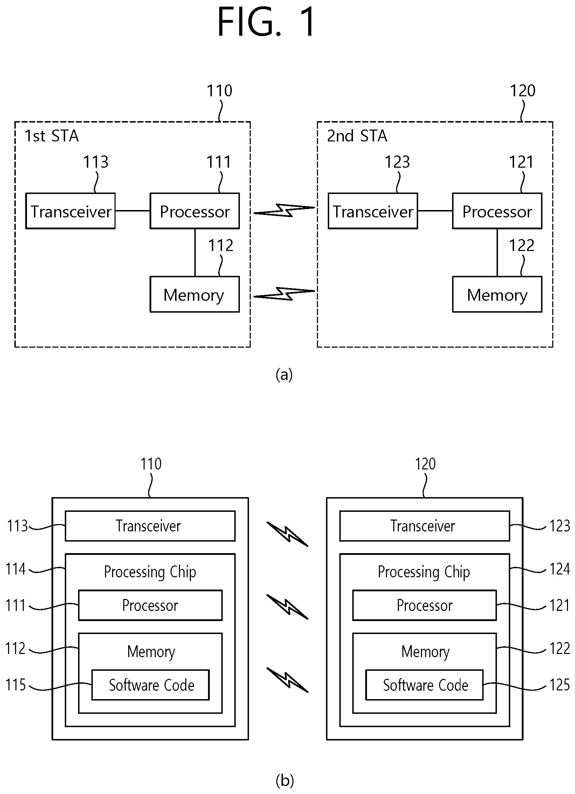

FIG. 1 illustrates an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGON^{®} series of processors made by Qualcomm^{®}, EXYNOS^{®} series of processors made by Samsung^{®}, A series of processors made by Apple^{®}, HELIO^{®} series of processors made by MediaTek^{®}, ATOM^{®} series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

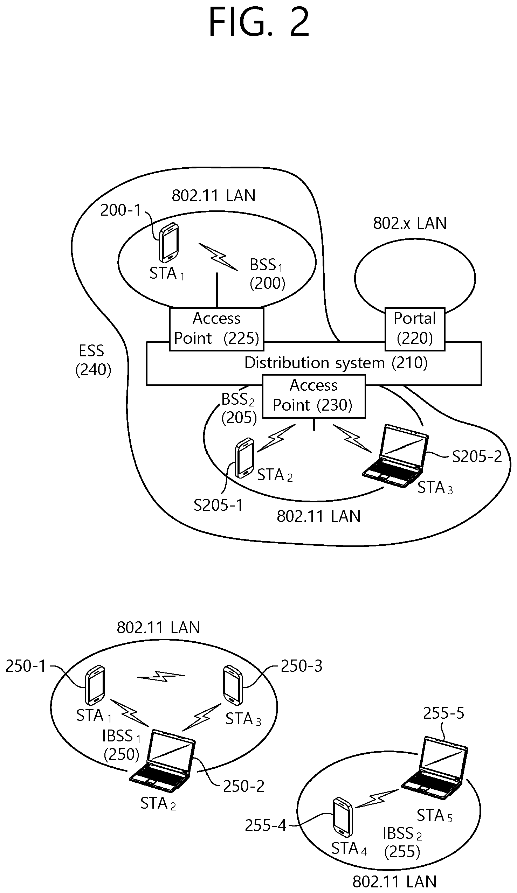

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, APs providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

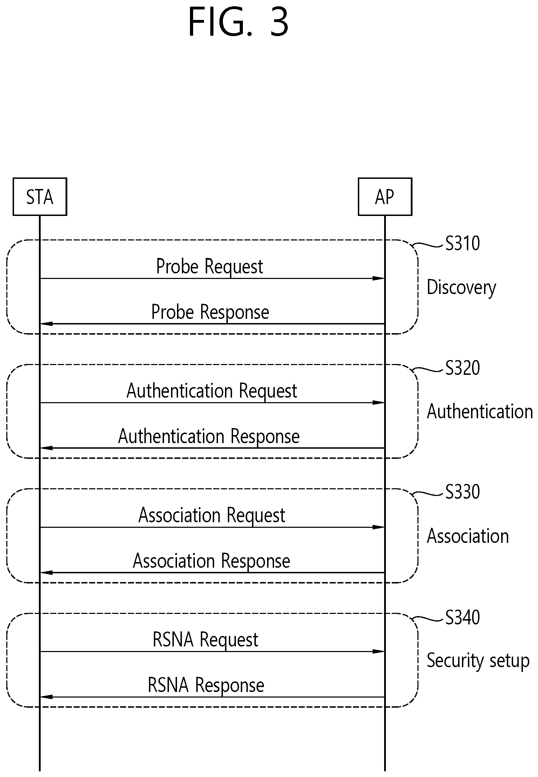

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

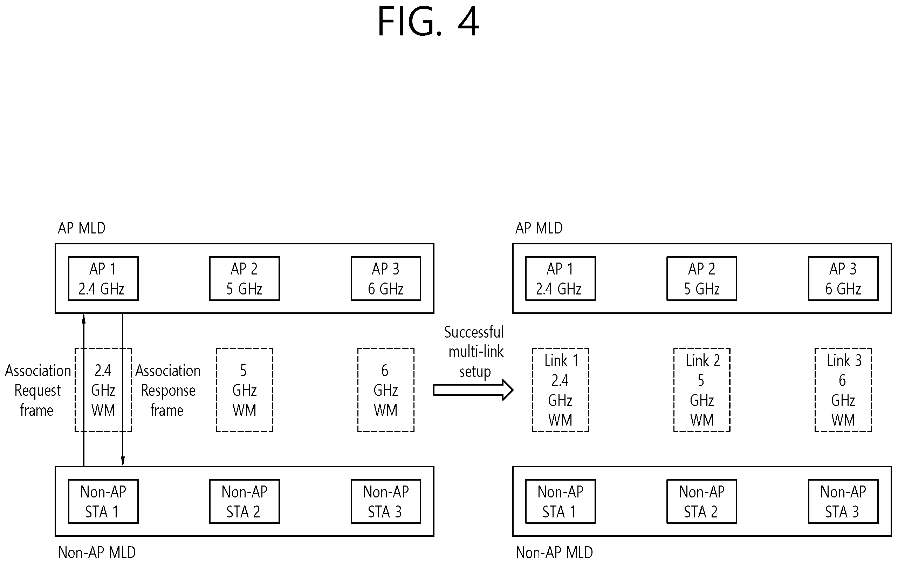

FIG. 4 illustrates an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

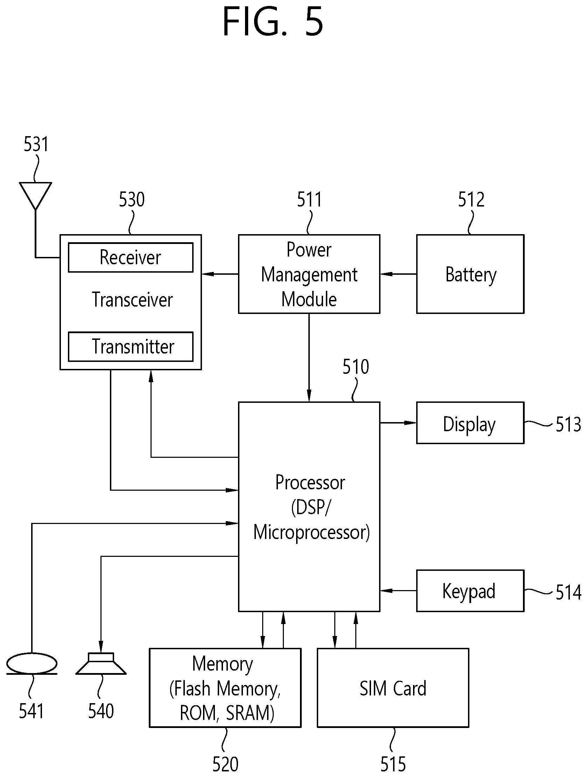

FIG. 5 illustrates a modified example of a transmitting device and/or a receiving device of the present disclosure.

The devices (e.g., AP STA, non-AP STA) shown in FIGS. 1 to 4 can be modified as shown in FIG. 5. The transceiver 530 of FIG. 5 can be identical to the transceiver 113, 123 of FIG. 1. The transceiver 530 of FIG. 5 can include a receiver and a transmitter.

The processor 510 of FIG. 5 can be identical to the processor 111, 121 of FIG. 1. Alternatively, the processor 510 of FIG. 5 can be identical to the processing chip 114, 124 of FIG. 1.

The memory 150 of FIG. 5 may be the same as the memory 112, 122 of FIG. 1. Alternatively, the memory 150 of FIG. 5 may be a separate external memory different from the memory 112, 122 of FIG. 1.

Referring to FIG. 5, the power management module 511 manages power for the processor 510 and/or the transceiver 530. The battery 512 supplies power to the power management module 511. The display 513 outputs the result processed by the processor 510. The keypad 514 receives input to be used by the processor 510. The keypad 514 may be displayed on the display 513. The SIM card 515 may be an integrated circuit used to securely store an international mobile subscriber identity (IMSI) and its associated keys, which are used to identify and authenticate subscribers in mobile devices such as mobile phones and computers.

Referring to FIG. 5, the speaker (540) may output sound-related results processed by the processor 510. The microphone (541) may receive sound-related input to be used by the processor 510.

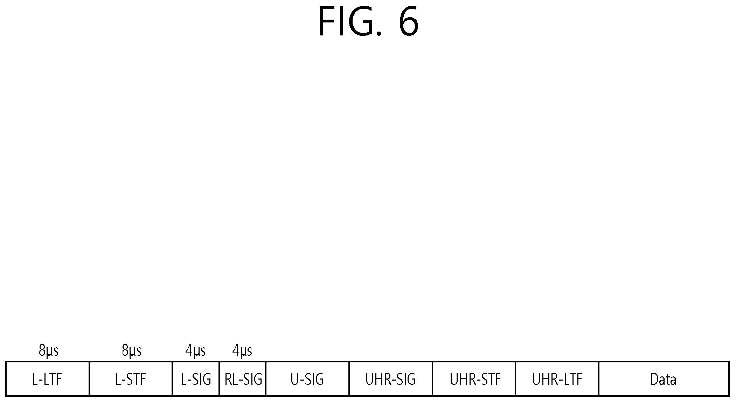

FIG. 6 illustrates an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 6. The PPDU described in the present disclosure can have, for example, a structure of FIG. 6. In addition, the PPDU described in the present disclosure can be called by various names such as a transmission PPDU, a reception PPDU, a first type or an Nth type PPDU, etc. The PPDU described in the present disclosure can be used in a WLAN system defined according to IEEE 802.11bn and/or a next-generation WLAN system that improves IEEE 802.11bn.

The PPDU of FIG. 6 can be related to various PPDU types used in a UHR system. For example, the example of FIG. 6 can be used for at least one of single-user (SU) mode/type/transmission, multi-user (MU) mode/type/transmission, and null-data packet (NDP) mode/type/transmission related to channel sounding. For example, if the example of FIG. 6 is related to NDP, the data field illustrated can be omitted. If the PPDU of FIG. 6 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 6.

In FIG. 6, L-STF or UHR-LTF may be called a preamble or a physical preamble, and may be generated/transmitted/received/acquired/decoded in the physical layer (included in the transmitting/receiving STA).

Each block illustrated in FIG. 6 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 6.

A subcarrier spacing of the L-STF, L-LTF, L-SIG, RL-SIG, U-SIG, and UHR-SIG fields of FIG. 6 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 6, the L-LTF and the L-STF may be the same as those in the conventional fields (for example, non-HT LTF and non-HT STF defined in conventional WLAN standards).

The L-SIG field of FIG. 6 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index{-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (CBF), spatial reuse (SR), type related to coordinated OFDMA (C-OFDMA), type related to coordinated TDMA (CTDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 6. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 6 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 6 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

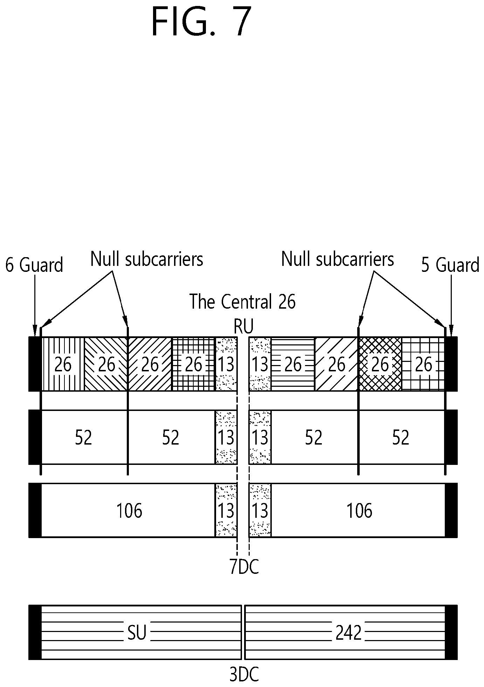

FIG. 7 illustrates the layout of resource units (RUs) used for a 20 MHz PPDU. That is, the UHR-LTF, UHR-STF, and/or data fields included in the 20 MHz PPDU can be transmitted/received through at least one of the various RUs defined in FIG. 7.

As illustrated in the uppermost part of FIG. 7, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

The layout of the RUs in FIG. 7 may be used not only for a multiple users (MUs) but also for a single user (SU), in which case one 242-unit may be used and three DC tones may be inserted as illustrated in the lowermost part of FIG. 7.

Although FIG. 7 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In the present disclosure, N-RU may be represented as N-tone RU, etc. For example, 26-RU may be represented as 26-tone RU.

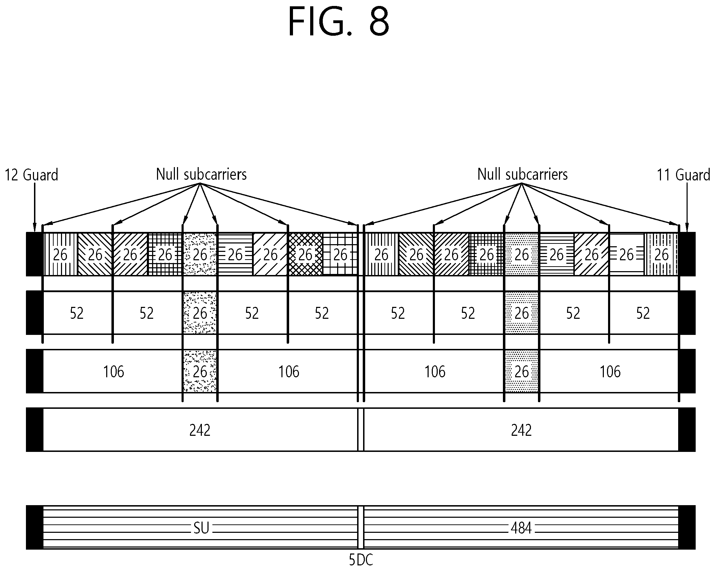

FIG. 8 illustrates the layout of resource units (RUs) used for 40MHz PPDU.

Similarly to FIG. 7 in which RUs having various sizes are used, a 26-RU, a 52-RU, a 106-RU, a 242-RU, a 484-RU, and the like may be used in an example of FIG. 8. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 8, when the layout of the RUs is used for a single user, a 484-RU may be used. The specific number of RUs may be changed similarly to FIG. 7.

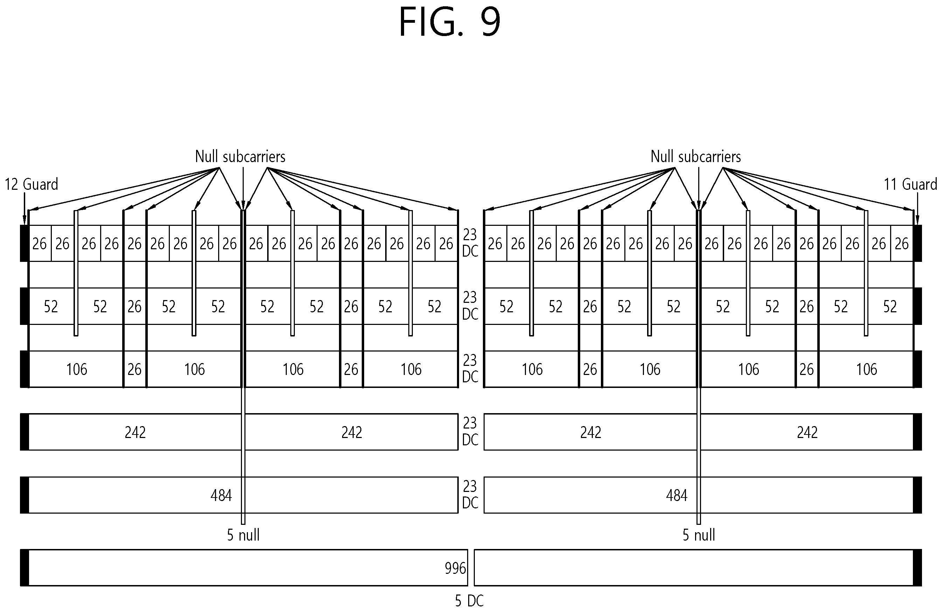

FIG. 9 illustrates the layout of resource units (RUs) used for an 80MHz PPDU. The layout of the resource units (RUs) used in the present disclosure may vary. For example, the layout of the resource units (RUs) used in the 80MHz band may vary.

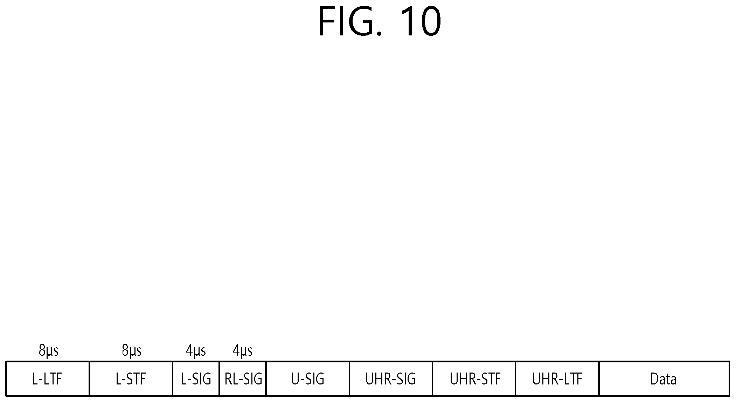

FIG. 10 illustrates an operation related to UL-MU. As shown, a transmitting STA (e.g., AP) can obtain TXOP 1025 by performing channel access through contending (i.e., backoff operation) and transmit trigger frame 1030. That is, the transmitting STA (e.g., AP) can transmit PPDU including trigger frame 1030. When PPDU including trigger frame is received, trigger-based (TB) PPDU is transmitted after delay of SIFS.

TB PPDU 1041, 1042 can be transmitted at the same time and transmitted from multiple STA (e.g., user STA) whose AID is indicated in trigger frame 1030. ACK frame 1050 for TB PPDU can be implemented in various forms. For example, ACK frame 1050 for TB PPDU can be implemented in the form of block ACK (BA).

In FIG. 10, transmission(s) of trigger Frame 1030, TB PPDU 1041, 1042 and/or ACK Frame 1050 can be performed within TXOP 1025.

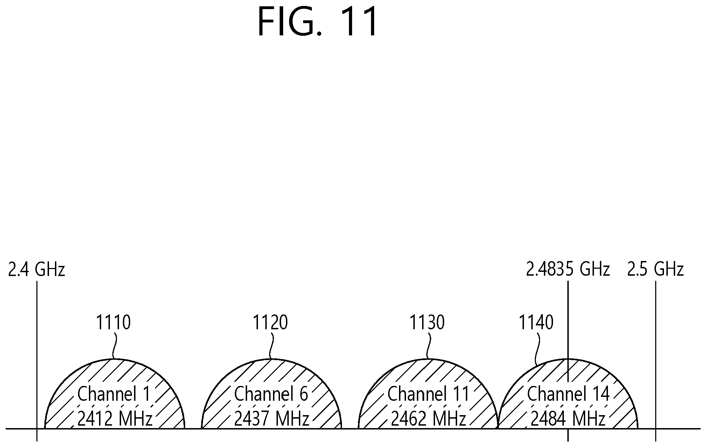

FIG. 11 illustrates an example of channels used/supported/defined within the 2.4 GHz band.

The 2.4 GHz band may also be referred to by other names, such as "first band." Furthermore, the 2.4 GHz band may refer to a frequency range in which channels with a center frequency adjacent to 2.4 GHz (e.g., channels with a center frequency between 2.4 and 2.5 GHz) are used/supported/defined.

The 2.4 GHz band may include multiple 20 MHz channels. Each 20 MHz within the 2.4 GHz band may have multiple channel indices (e.g., indices 1 through 14). For example, the center frequency of a 20 MHz channel assigned with channel index 1 may be 2.412 GHz, the center frequency of a 20 MHz channel assigned with channel index 2 may be 2.417 GHz, and the center frequency of a 20 MHz channel assigned with channel index N may be (2.407 + 0.005*N) GHz. Channel indices may be referred to by various names, such as channel numbers. The specific numerical values of the channel indices and center frequencies may vary.

FIG. 11 illustrates examples of four channels within the 2.4 GHz band. The illustrated first frequency region 1110 to fourth frequency regions 1140 may each include one channel. For example, the first frequency region 1110 may include channel 1 (a 20 MHz channel with index 1). In this case, the center frequency of channel 1 may be set to 2412 MHz. The second frequency range 1120 may include channel 6. The center frequency of channel 6 may be set to 2437 MHz. The third frequency range 1130 may include channel 11. The center frequency of channel 11 may be set to 2462 MHz. The fourth frequency range 1140 may include channel 14. The center frequency of channel 14 may be set to 2484 MHz.

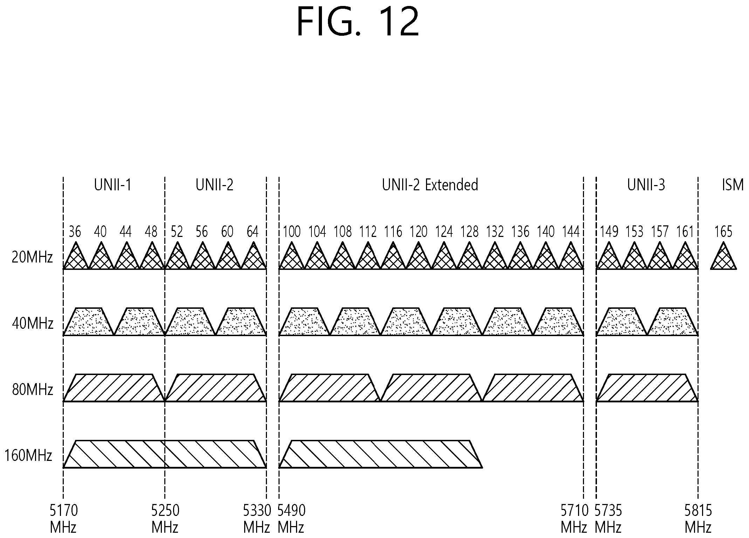

FIG. 12 illustrates an example of channels used/supported/defined within the 5 GHz band.

The 5 GHz band may be referred to by other names, such as "second band" or "band." The 5 GHz band may refer to a frequency range in which channels with a center frequency of 5 GHz or more but less than 6 GHz (or less than 5.9 GHz) are used/supported/defined. Alternatively, the 5 GHz band may include multiple channels between 4.5 GHz and 5.5 GHz. The specific numerical values shown in FIG. 12 may vary.

The multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Multiple channels may be configured within the 5 GHz band, and the bandwidth of each channel may vary, such as 20 MHz, 40 MHz, 80 MHz, or 160 MHz. For example, the 5170 MHz to 5330 MHz frequency range within UNII-1 and UNII-2 may be divided into eight 20 MHz channels. The 5170 MHz to 5330 MHz frequency range can be divided into four channels across a 40 MHz frequency band. The 5170 MHz to 5330 MHz frequency range can be divided into two channels across an 80 MHz frequency band. Alternatively, the 5170 MHz to 5330 MHz frequency range can be divided into one channel across a 160 MHz frequency band.

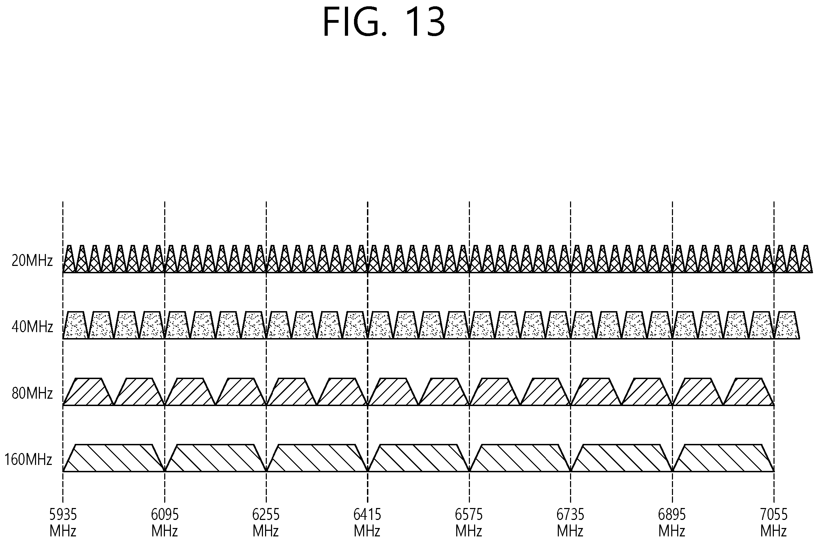

FIG. 13 illustrates an example of channels used, supported, and defined within the 6 GHz band.

The 6 GHz band may also be referred to by other names, such as the third band. The 6 GHz band may refer to a frequency range in which channels with center frequencies above 5.9 GHz are used, supported, and defined. The specific numbers shown in FIG. 13 may vary.

For example, the 20 MHz channel in FIG. 13 may be defined starting from 5.940 GHz. Specifically, the leftmost channel among the 20 MHz channels in FIG. 13 may have an index of 1 (or channel index, channel number, etc.), and a center frequency of 5.945 GHz may be assigned. That is, the center frequency of the index N channel may be determined as (5.940 + 0.005*N) GHz.

Accordingly, the indexes (or channel numbers) of the 20 MHz channels of FIG. 13 are 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, It can be 197, 201, 205, 209, 213, 217, 221, 225, 229, 233. Also, according to the (5.940 + 0.005*N) GHz rule mentioned above, the indices of the 40 MHz channels in FIG. 13 can be 3, 11, 19, 27, 35, 43, 51, 59, 67, 75, 83, 91, 99, 107, 115, 123, 131, 139, 147, 155, 163, 171, 179, 187, 195, 203, 211, 219, 227.

Meanwhile, STAs having data available for transmission may perform clear channel assessment (CCA) for sensing a medium during a specific period (for example, distributed coordination function (DCF) inter-frame space (DIFS)) before transmitting data. At this time, if the medium is idle, the STA can perform transmission using the medium. However, if the medium is busy, it can be assumed that several STAs are already waiting to use the medium, and the STA can transmit data after waiting for a random backoff duration in addition to the DIFS. At this time, the random backoff duration allows collision avoidance, because when it is assumed that there are several STAs for transmitting data, each STA probabilistically has a different backoff duration value and eventually has a different transmission time. Once one STA starts transmission, other STAs cannot use the medium.

In a random backoff procedure, if a specific medium changes from a busy state to an idle state, several STAs start preparation for sending data. At this time, in order to minimize collisions, STAs intending to transmit data respectively select a random backoff count, and wait for a slot time corresponding to the selected counter. The random backoff count is a pseudo-random integer value and one of values uniformly distributed in a range of [0 CW] is selected. CW means a contention window. The CW parameter takes a CWmin value as an initial value, but if transmission fails, the value is increased by two times. For example, if an ACK response for a transmitted data frame has not been received, it can be considered that a collision has occurred. If the CW value reaches a CWmax value, the CWmax value is maintained until data transmission succeeds, and if data transmission succeeds, the CW value is reset to the CWmin value. At this time, CW, CWmin, and CWmax may be expressed as 2^n-1 for convenience of implementation and operation. Meanwhile, when a random backoff procedure starts, a STA selects a random backoff count within a range of [0 CW], and then continues to monitor the medium while a backoff slot is counted down. If the medium becomes busy in the meantime, it stops the countdown and then resumes the countdown of the remaining backoff slots when the medium becomes idle again.

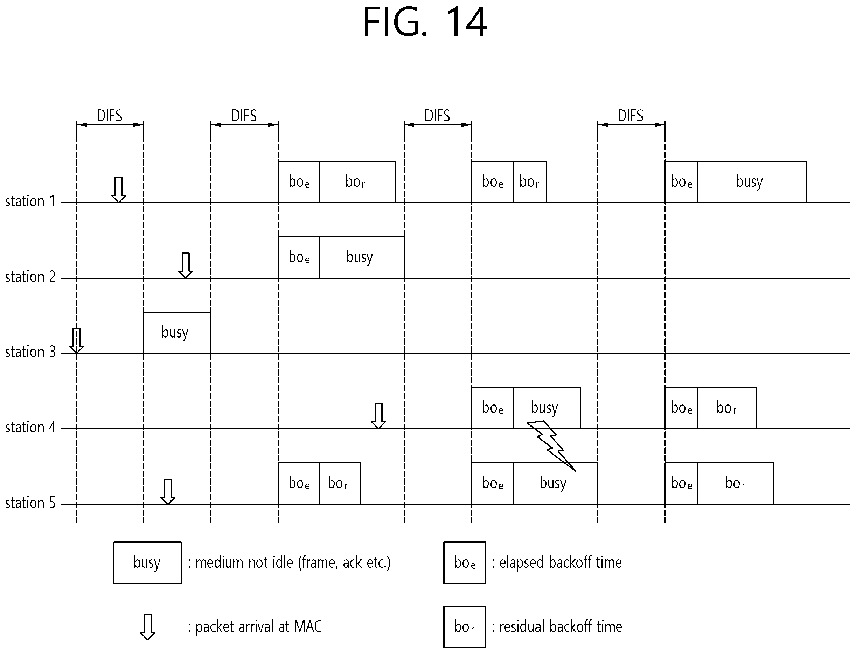

FIG. 14 shows an example of a random backoff procedure.

Referring to FIG. 14, when several STAs have data they intend to send, in the case of STA3, a data frame can be immediately transmitted because the medium is idle for as long as DIFS, and the remaining STAs wait for the medium to become idle. Since the medium has been idle for a while, several STAs would monitor an opportunity to use the medium. Therefore, each STA selects a random backoff count, and at this time, STA 2, which has selected the smallest backoff count, can transmit a data frame. After the transmission of STA2 ends, the medium becomes idle again and STAs resume the countdown for the backoff duration that was previously stopped. STA 5, which had the next smallest random backoff count value and stopped the countdown for a moment when the medium was busy, starts transmission of a data frame after counting down the remaining backoff slots, but a collision may occur as it happens to overlap with a random backoff count value of STA 4. At this time, since both STAs do not receive an ACK response after data transmission, both STAs select a random backoff count value again after increasing CW by two times.

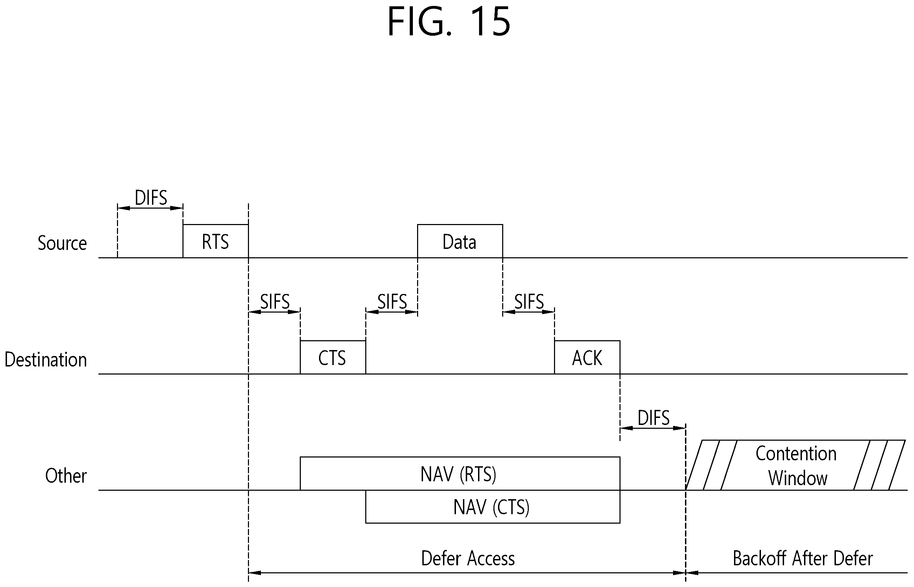

FIG. 15 illustrates an example of a procedure related to NAV setting.

Referring to FIG. 15, when a Source (e.g., an AP STA/non-AP STA) intending to transmit data transmits a request-to-send (RTS) frame to a Destination (e.g., an AP STA/non-AP STA) receiving the data, the Destination can transmit a clear-to-send (CTS) frame to neighboring stations to notify them that it will receive the data. In other words, the Destination designated as the receiver through the RTS frame can transmit a CTS frame. If the Source that transmitted the RTS frame receives the CTS frame, the Source can initiate data transmission to the Destination.

Meanwhile, if a STA other than the Destination designated as the receiver through the RTS frame receives the RTS frame, or if a STA other than the Source that transmitted the RTS frame receives the CTS frame, the STA can configure a network allocation vector (NAV). A STA that has set a NAV may not transmit data during the NAV period, which allows the STA to avoid collisions between the STA and the Source/Destination. On the other hand, if the Destination designated as the receiver through the RTS frame receives the RTS frame, or if the Source that transmitted the RTS frame receives a CTS frame, the Source/Destination does not set a NAV.

If a CTS frame (e.g., PHY-RXSTART.indication primitive) is not received within a certain period from the time the RTS frame is received (e.g., the time when the MAC receives the PHY-RXEND.indication primitive corresponding to the RTS frame), STAs that have set or updated a NAV through the RTS frame may reset the NAV (e.g., to 0). The certain period may be (2*aSIFSTime + CTS_Time + aRxPHYStartDelay + 2*aSlotTime). The CTS_Time can be calculated based on the length and data rate of the CTS frame indicated by the RTS frame.

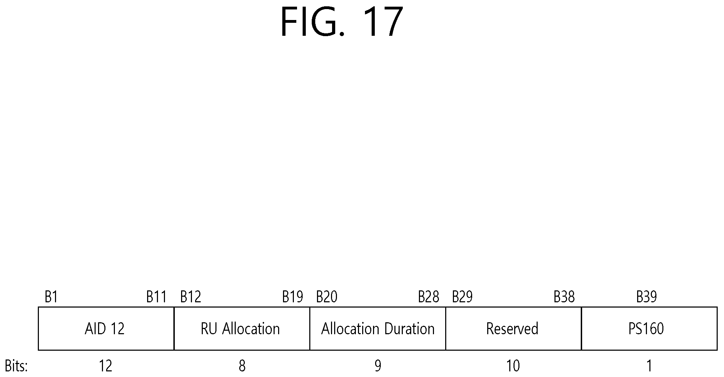

For convenience of description, FIG. 17 illustrates setting or updating the NAV through the RTS frame or the CTS frame. However, NAV setting/resetting/updating can also be performed based on the duration field of various other frames, such as non-HT PPDU, HT PPDU, VHT PPDU, or HE PPDU (e.g., the duration field in the MAC header of a MAC frame). For example, if the RA field in a received MAC frame does not match its own address (e.g., MAC address), The STA may set, reset, or update the NAV based on the value of the Duration field in the received MAC frame.

A non-AP STA shall maintain two NAVs, and an AP may maintain two NAVs: an intra-BSS NAV and a basic NAV. The intra-BSS NAV may be updated/set by an intra-BSS PPDU. The basic NAV may be updated /set by an inter-BSS PPDU or a PPDU that cannot be classified as intra-BSS or inter-BSS.

The MAC frames included in the data field of the PPDU of the present disclosure can be classified into various types. For example, the MAC frames of the present disclosure can be classified into control frames, management frames, and data frames.

For example, the management frame includes Association Request, Association Response, Reassociation Request, Reassociation Response, Probe Request, Probe Response, Beacon, Disassociation, Authentication, and Deauthentication frames/signals defined in conventional WLANs. For the management frame, the value of the type field (B3 and B2) of the MAC header is set to 00. Additionally, the values of the subtype fields (B7, B6, B5, B4) of the MAC header are as follows: Association Request (0000), Association Response (0001), Reassociation Request (0010), Reassociation Response (0011), Probe Request (0100), Probe Response (0101), Beacon (1000), Disassociation (1010), Authentication (1011), Deauthentication (1100).

For example, the control frame includes the Trigger Beamforming Report Poll, NDP Announcement (NDPA), Control Frame Extension, Control Wrapper, Block Ack Request (BlockAckReq), Block Ack (BlockAck), PS-Poll, RTS, CTS, Ack, and CF-End frames/signals defined in conventional WLANs. For the control frame, the values of the type fields (B3 and B2) of the MAC header are set to 01. Additionally, the values of the subtype fields (B7, B6, B5, B4) of the MAC header are as follows: Trigger

(0010), Beamforming Report Poll (0100), NDP Announcement (0101), Control Frame Extension (0110), Control Wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc., as defined in conventional WLANs. For this data frame, the values of the type fields (B3 and B2) of the MAC header are set to 10.

The type of the MAC frame used in the present disclosure may be identified through the type field/information and the subtype field/information included in the frame control field of the header of the MAC frame (i.e., the MAC header). For example, the "trigger frame" of the present disclosure may mean a MAC frame in which the type bits B3 and B2 in the frame control field of the MAC header are set to 01, and the subtype bits B7, B6, B5, and B4 in the frame control field are also set to 0010. Various MAC frames described in the present disclosure are inserted/included in the data field of various PPDUs (e.g., HE/VHT/HE/EHT/UHR PPDUs).

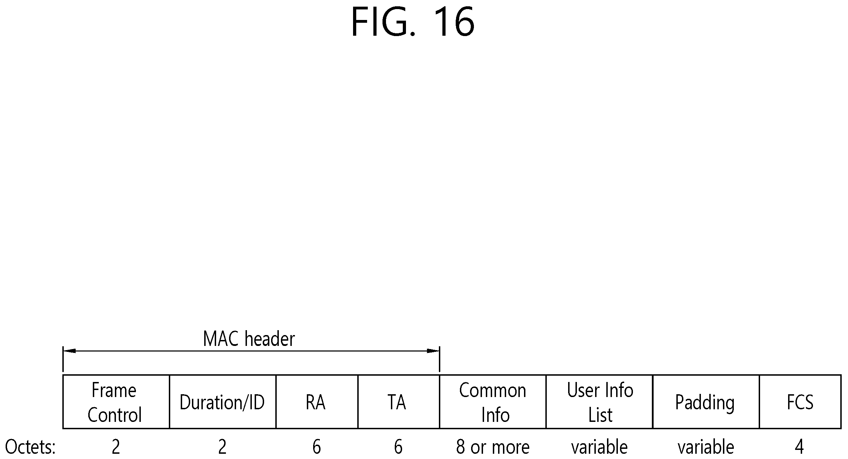

FIG. 16 illustrates a trigger frame format. The trigger frame format may also be referred to as the structure of a trigger frame.

Referring to FIG. 16, a trigger frame may include a frame control field, a duration/ID field, a receiver address (RA) field, a transmitter address (TA) field, a Common Info field, a User Info list field, a padding field, and/or a frame check sequence (FCS) field. Optionally, the trigger frame may further comprise a special User Info field between the Common Info field and the User Info list field. The User Info list field may include one or more User Info fields. The frame control field, duration/ID field, RA field, and TA field may constitute a MAC header.

For example, the common information field may comprise a trigger type subfield. The value of the trigger type subfield may indicate a variant of the trigger frame as shown in <Table 1>:

**[Table 1]**

| **Trigger type subfield value** | **Trigger frame variant** |
|---|---|
| 0 | Basic |
| 1 | Beamforming Report Poll (BFRP) |
| 2 | MU-BAR |
| 3 | MU-RTS |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8-15 | Reserved |

For example, if the value of the trigger type subfield is set to 0, the trigger frame may be a basic trigger frame. For example, if the value of the trigger type subfield is set to 3, the trigger frame may be a multi-user (MU) RTS trigger frame. Meanwhile, according to the EHT (i.e., 802.11be) standard, an AP can allocate a portion of the time duration within the TXOP obtained by the AP to support peer-to-peer (P2P) transmission to a non-AP STA. To allocate a portion of the time duration within a TXOP, a TXOP Sharing Mode subfield may be defined within the Common Info Field of the MU-RTS Trigger frame. When the value of the TXOP Sharing Mode subfield is non-zero, such a MU-RTS trigger frame may be referred to as a MU-RTS TXOP Sharing (TXS) Trigger frame (TF). A description of the values of the TXOP sharing mode subfield is shown in <Table 2> below:

**[Table 2]**

| **Triggered TXOP Sharing Mode subfield value** | **Description** |
|---|---|
| 0 | MU-RTS that does not initiate MU-RTS TXOP sharing procedure. |
| 1 | MU-RTS that initiates MU-RTS TXOP sharing procedure wherein a scheduledSTA can only transmit MPDU(s) addressed to its associated AP. |
| 2 | MU-RTS that initiates MU-RTS TXOP sharing procedure wherein a scheduled STA can transmit MPDU(s) addressed to its associated AP or addressed to another STA. |
| 3 | Reserved. |

For example, if the TXOP sharing mode subfield has a value of 1, one or more (non-TB) PPDU transmissions to the AP can be supported. If the TXOP sharing mode subfield has a value of 2, both (non-TB) PPDU transmission to the AP and P2P transmission can be supported. In this disclosure, the MU-RTS TXS TF may also be referred to simply as a TXS trigger frame.

FIG. 17 illustrates an example of the User Info field format of the MU-RTS TXS TF.

Referring to FIG. 17, the User Info field may include an AID subfield, an RU allocation subfield, an allocation duration subfield, reserved bits, and/or a PS160 subfield.

The AID subfield may indicate the AID for the corresponding STA. The RU allocation subfield may indicate RU allocation for the corresponding STA.

The allocation duration subfield may include 9 bits from B20 to B28 in the MU-RTS TXS TF and may indicate an allocation duration in 16us units. In this case, the maximum length of the allocation duration indicated by the allocation duration subfield may be 2^9 = 8192 us.

The PS160 subfield may indicate the primary 160 MHz channel or the secondary 160 MHz channel to which RU or MRU allocation applies.

Meanwhile, many APs are being installed adjacent to each other to enable STAs to maintain continuous WLAN connections over a wider area. However, overlapping BSSs of multiple APs can lead to issues such as radio interference and transmission collisions between APs. To address these issues, various technologies related to coordination between APs in the frequency, time, and spatial domains (e.g., RU selection, joint transmission, nulling) have been proposed. Various issues that may arise during inter-AP coordination need to be addressed.

In the present disclosure, a multi-AP operation is proposed. The multi-AP operation may be based on a technique of reducing various interferences such as inter-symbol interference (ISI) through coordination with a neighboring AP (for example, an AP located in an overlapping BSS).

For example, the multi-AP operation may be classified into a multi-AP coordination scheme (or, a coordination scheme) based on various techniques/types/formats/protocols. For example, the coordination scheme may include coordinated TDMA (Co-TDMA) that distinguishes radio resources allocated to several APs based on a time axis (time domain). Additionally or alternatively, the coordination scheme may include coordinated OFDMA (C-OFDMA) that distinguishes radio resources allocated to several APs based on a frequency axis (time domain). Additionally or alternatively, the coordination scheme may include coordinated spatial reuse (Co-SR) that applies spatial reuse (SR) to at least one AP. Additionally or alternatively, the coordination scheme may include coordinated beamforming (Co-BF)/nulling that transmits by nulling interference occurring in a neighbor (for example, an adjacent AP/STA, and/or OBSS AP/OBSS STA). Additionally or alternatively, the coordination scheme may include AP selection in which an AP having a good channel state among adjacent APs (for example, at least one AP located in a BSS or OBSS and having an excellent channel state) performs transmission. Additionally or alternatively, the coordination scheme may include joint transmission (JTX) or JT in which a plurality of APs (for example, a plurality of APs included in the same BSS/OBSS, or a plurality of APs included in mutually different BSSs/OBSSs) simultaneously perform transmission and reception by coordinating, and JTX/JT may be implemented based on joint beamforming or joint MU-MIMO.

In the present disclosure, "multi-AP (coordination) operation" may also be referred to as "multi-AP (coordination) transmission". In addition, "multi-AP (coordination) operation/transmission" and "multi-AP coordination scheme (or, coordination scheme)" may be used interchangeably.

In order for multi-AP coordination to be achieved between two APs, the two APs may be in a connected/associated state with each other, and/or after performing a negotiation procedure for exchanging capability information/requirement information of each other in advance, may perform multi-AP transmission (e.g., coordinated time division multiple access (Co-TDMA), coordinated orthogonal frequency division multiple access (C-OFDMA), coordinated spatial reuse (Co-SR), coordinated beamforming (Co-BF), AP selection, or joint transmission (J-TX)) based on the obtained information. That is, in order for the multi-AP transmission to be smoothly performed, the configuration/management of the multi-AP coordination, and/or a negotiation procedure for transmission based on a specific multi-AP coordination scheme need to be performed in advance between the SAP and the DAP described above. Through the negotiation procedure, a multi-AP set may be established/configured. Therefore, the negotiation procedure may also be referred to as a multi-AP set establishment/configuration procedure.

In order for multi-AP coordination to be successfully performed, a multi-AP selection procedure for selecting a DAP with which the SAP intends to share a TXOP within a multi-AP set configured/established through a negotiation procedure, and/or for notifying that the TXOP is scheduled to be shared may be performed. Through the multi-AP selection procedure, the SAP may determine whether a TXOP sharing to the DAP is required within the obtained TXOP, and when a TXOP sharing to a specific DAP is not required, may determine a TXOP sharing to a subsequent/other DAP. Alternatively, the SAP may simply notify the target DAP that the TXOP is scheduled to be shared in the multi-AP selection procedure, and through this, may perform multi-AP coordination while reducing an overhead caused by the multi-AP selection procedure.

In the multi-AP selection procedure, the SAP may transmit a request frame (i.e., a request frame for an AP selection) for selecting a DAP to share a TXOP from the multi-AP set configured/established through the negotiation procedure, and the DAP receiving the request frame may transmit a response frame to the request frame (i.e., a response frame for an AP selection) based on whether a TXOP sharing is required. When receiving a response frame comprising an indication that a TXOP sharing is not required from the DAP, or when failing to receive a response frame from the DAP, the SAP may transmit a request frame for an AP selection to another DAP - that is, the SAP may perform an AP reselection. Alternatively, the SAP may simply notify the target DAP that the TXOP is scheduled to be shared in the multi-AP selection procedure. For example, the SAP may transmit an AP selection request frame that does not solicit a response frame to the target DAP with which the SAP intends to share the TXOP, and the DAP receiving such an AP selection request frame may prepare an operation for the scheduled TXOP sharing.

The SAP may transmit a frame for a TXOP sharing (e.g., a TXOP sharing frame/MU-RTS TXS trigger frame) to the DAP selected through the multi-AP selection procedure, and the DAP may perform a frame exchange with a non-AP STA(s) associated with the DAP in a time duration (e.g., an allocation duration) allocated by the TXOP sharing frame.

When the triggered TXOP sharing protocol is utilized for multi-AP coordination, transmissions within the BSS of each coordinating AP are divided into time units, so that each coordinating AP can perform frame exchange without affecting other coordinating APs.

In this disclosure, "frame exchange (FE)" may include a frame transmission and/or reception operation between STAs. The STA may be an AP or a non-AP STA. Herein, a frame may include various types of frames (e.g., a data frame, a control frame, and a management frame).

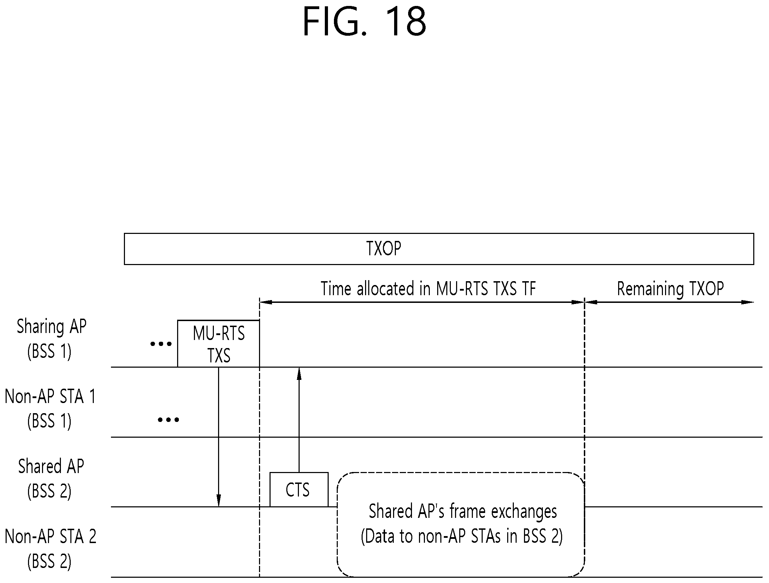

FIG. 18 shows an example of an operation diagram of single TXOP-based coordinated time division multiple access (Co-TDMA) between coordinating APs.

For example, C-TDMA can mean that each coordinating AP exchanges frames without affecting other coordinating APs by dividing transmissions within the BSS of each coordinating AP by time units.

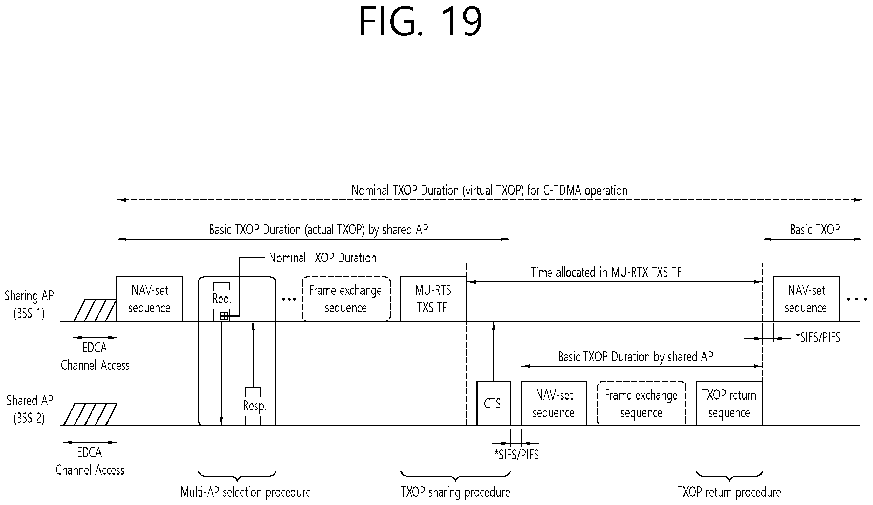

When the triggered TXS protocol is applied to multi-AP coordination operations, the AP in the triggered TXS protocol may be the AP that shares the TXOP in the multi-AP coordination operation, and the STA in the triggered TXS protocol may be the AP that is granted the shared TXOP in the multi-AP coordination operation. In this disclosure, the AP that shares the TXOP may be referred to as a sharing AP (SAP), and the AP that is granted the TXOP by the SAP may be referred to as a shared AP (DAP). The term "SAP" here does not limit the entities sharing the TXOP to only AP STAs - the SAP may also include non-AP STAs that share the TXOP. Furthermore, the term "DAP" does not limit the entity that is granted the shared TXOP to only being an AP STA, and a DAP may also include non-AP STAs that is granted the shared TXOP (or, that transmit and receive with an AP STA that is granted the shared TXOP). Furthermore, frame exchanges performed by a DAP with non-AP STAs belonging to the DAP BSS or SAPs during the allocated time (i.e., the time allocated by the MU-RTS TXS TF in FIG. 19, which is an allocation duration for the DAP/AP2 within a TXOP indicated by the MU-RTS TXS TF transmitted from the SAP) may be referred to as BSS frame exchanges (FEs) of the DAP. For example, RTS/CTS frame exchanges between a DAP and a non-AP STA followed by data frame transmission and block ACK frame responses, UL data frame transmissions by non-AP STAs based on trigger frames transmitted from the DAP, and/or data frame transmissions by the DAP based on trigger frames transmitted from the SAP may be performed.

FIG. 19 shows an example of a two TXOP-based coordinated time division multiple access (Co-TDMA) operation between coordination APs.

Referring to FIG. 19, in the two TXOP-based Co-TDMA operation, since a TXOP holder changes upon a TXOP sharing, the DAP and some non-AP STAs in the BSS of the DAP may perform a frame exchange with the DAP without being affected by a NAV of the SAP. Specifically, the SAP may include a nominal TXOP duration value in a frame (e.g., control frame, management frame, trigger frame, and/or data frame) delivered in a multi-AP selection procedure, and transmit it to coordinated AP(s) during a basic TXOP duration. DAP(s) scheduled to be shared a TXOP from the SAP within the nominal TXOP duration may identify in advance whether the TXOP is shared based on the notified nominal TXOP duration information. Therefore, the DAP(s) selected by the SAP may wait without performing a frame exchange until a scheduled TXOP sharing time, perform a secondary channel access according to capabilities of the DAP(s), and/or enter an AP power mode.

Since APs participating in multi-AP coordination belong to different BSSs, BSS operating channel widths (or, available bandwidths) may be different from each other. As a difference in available bandwidths between two APs is larger, an efficiency through a Co-TDMA transmission based on multi-AP coordination may decrease.

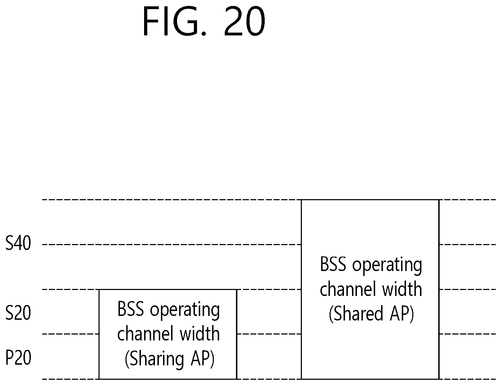

FIG. 20 shows an example of a case where BSS operating channel widths are different among coordination APs.

Referring to FIG. 20, an available bandwidth of the SAP sharing a TXOP may be 40MHz, and an available bandwidth of the DAP shared a TXOP may be 80MHz. That is, the available bandwidth of the DAP shared a TXOP may be larger than the available bandwidth of the SAP sharing a TXOP. In this case, a performance improvement for a (wideband) transmission using a Co-TDMA scheme may be insignificant.

Therefore, the present disclosure provides a bandwidth expansion method/apparatus for a DAP in a Co-TDMA operation in which a TXOP sharing is performed within a single TXOP (e.g., a Co-TDMA operation in which a TXOP sharing is performed within a single TXOP, a Co-TDMA operation in which a TXOP sharing is performed based on two TXOPs). Specifically, a method/apparatus for supporting a bandwidth expansion from an aspect of an SAP, and a method/apparatus for supporting a bandwidth expansion from an aspect of a DAP are provided.

Based on the bandwidth expansion method/apparatus provided in the present disclosure, the DAP may quickly perform a frame exchange using the expanded available bandwidth during the time (or, allocation duration) allocated from the SAP.

Specific designations/names proposed in the present disclosure may be changed, and are not limited thereto.

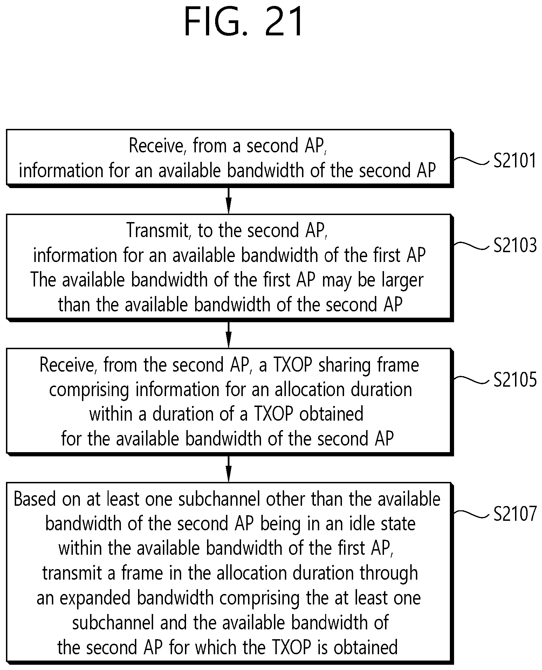

FIG. 21 shows an example of a method performed by a first AP for a bandwidth expansion in multi-AP coordination according to an embodiment of the present disclosure. In FIG. 21, the first AP may be a DAP, and the second AP may be an SAP.

Referring to FIG. 21, in step S2101, the first AP may receive, from a second AP, information for an available bandwidth (or, BSS operating channel width) of the second AP.

In step S2103, the first AP may transmit, to the second AP, information for an available bandwidth of the first AP. The available bandwidth of the first AP may be larger than the available bandwidth of the second AP.

In step S2105, the first AP may receive, from the second AP, a TXOP sharing frame (e.g., MU-RTS TXS TF) comprising information for an allocation duration within a duration of a TXOP obtained for the available bandwidth of the second AP.

In step S2107, based on at least one subchannel other than the available bandwidth of the second AP being in an idle state within the available bandwidth of the first AP, the first AP may transmit a frame in the allocation duration through an expanded bandwidth comprising the at least one subchannel and the available bandwidth of the second AP for which the TXOP is obtained.

According to various embodiments, before the TXOP sharing frame is transmitted, a CCA may be performed on the at least one subchannel. The TXOP sharing frame may be received through the expanded bandwidth, based on a result of the CCA being an idle state.

According to various embodiments, the CCA may be performed during a short interframe space (SIFS) or a priority interframe space (PIFS).

According to various embodiments, the first AP may transmit, to the second AP, a response frame (e.g., CTS frame/CTS-to-self frame) to the TXOP sharing frame through the expanded bandwidth after receiving the TXOP sharing frame through the expanded bandwidth.

According to various embodiments, a value of a channel bandwidth parameter (e.g., TXVECTOR parameter CH_BANDWIDTH) of a PPDU comprising the TXOP sharing frame received by the first AP through the expanded bandwidth may be set larger than a value of a channel bandwidth parameter of a PPDU comprising a frame transmitted by the second AP through the available bandwidth of the second AP before the TXOP sharing frame.

According to various embodiments, the first AP may perform a clear channel assessment (CCA) on the at least one subchannel after receiving the TXOP sharing frame. The first AP may transmit the frame in the allocation duration through the expanded bandwidth based on a result of the CCA being an idle state.

According to various embodiments, the first AP may transmit, to the second AP, a response frame to the TXOP sharing frame through the available bandwidth of the second AP after receiving the TXOP sharing frame.

According to various embodiments, the CCA may be performed during a short interframe space (SIFS) after the TXOP sharing frame is received, a duration in which the response frame is transmitted, and a SIFS after the response frame is transmitted.

According to various embodiments, the CCA may be performed during a short interframe space (SIFS) after the response frame is transmitted.

According to various embodiments, the CCA may be performed during a short interframe space (SIFS) after the TXOP sharing frame is received. Based on a result of the CCA being an idle state, the first AP may transmit, to the second AP, a response frame to the TXOP sharing frame through the expanded bandwidth.

According to various embodiments, a value of a channel bandwidth parameter of a physical layer protocol data unit (PPDU) comprising a frame transmitted by the first AP through the expanded bandwidth may be set larger than a value of a channel bandwidth parameter of a PPDU comprising a frame transmitted by the second AP through the available bandwidth of the second AP.

According to various embodiments, a clear channel assessment (CCA) may be performed on the at least one subchannel. A backoff may be performed on the available bandwidth of the second AP.

According to various embodiments, the first AP may transmit the frame in the allocation duration through the expanded bandwidth based on a result of the CCA and the backoff being an idle state.

According to various embodiments, the CCA and the backoff may be performed before the TXOP sharing frame is transmitted. The TXOP sharing frame may be received through the expanded bandwidth, based on a result of the CCA and the backoff being an idle state.

According to various embodiments, the first AP may perform the CCA and the backoff after transmitting a response frame to the TXOP sharing frame through the available bandwidth of the second AP.

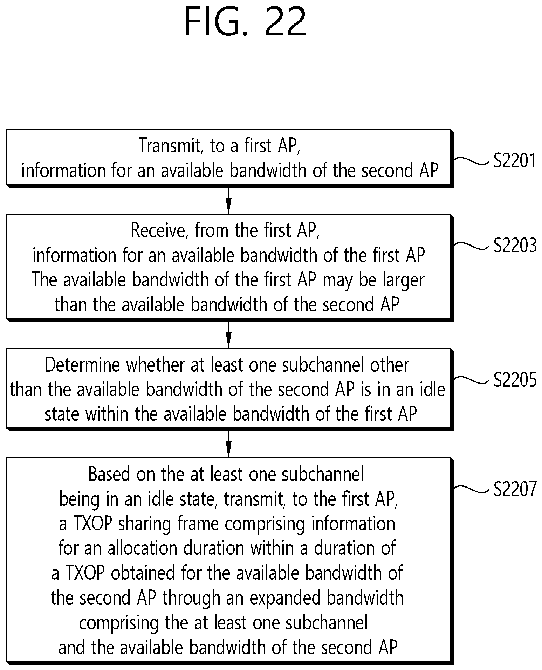

FIG. 22 shows an example of a method performed by a second AP for a bandwidth expansion in multi-AP coordination according to an embodiment of the present disclosure. In FIG. 22, the first AP may be a DAP, and the second AP may be an SAP.

Referring to FIG. 22, in step S2201, the second AP may transmit, to a first AP, information for an available bandwidth of the second AP.

In step S2203, the second AP may receive, from the first AP, information for an available bandwidth of the first AP. The available bandwidth of the first AP may be larger than the available bandwidth of the second AP.

In step S2205, the second AP may determine whether at least one subchannel other than the available bandwidth of the second AP is in an idle state within the available bandwidth of the first AP.

In step S2207, based on the at least one subchannel being in an idle state, the second AP may transmit, to the first AP, a TXOP sharing frame comprising information for an allocation duration within a duration of a transmission opportunity (TXOP) obtained for the available bandwidth of the second AP through an expanded bandwidth comprising the at least one subchannel and the available bandwidth of the second AP.

Hereinafter, a detailed implementation for a bandwidth expansion in multi-AP coordination is described.

### I. Bandwidth expand in single TXOP-based Co-TDMA

A method and apparatus for a bandwidth expansion upon a TXOP sharing in a Co-TDMA operation are provided. The Co-TDMA operation may include a Co-TDMA operation in which a TXOP sharing is performed within a single TXOP.

### 1. Method for supporting bandwidth expansion from aspect of SAP

### (1) Without backoff

The SAP may obtain information for an available bandwidth of the DAP in a multi-AP selection procedure (or, a polling/announcement, schedule announcement, and/or coordination announcement procedure), and perform a CCA (e.g., energy detection (ED), carrier sensing (CS)) on an expandable bandwidth (i.e., an available bandwidth of the DAP) until sharing a TXOP. When sharing the TXOP, the SAP expands to an available bandwidth in an idle state that has been detected, performs a TXOP sharing, and the DAP that has transmitted a response frame (e.g., CTS frame) for a corresponding bandwidth may perform FE during the allocated time (or, allocation duration) through the expanded bandwidth.

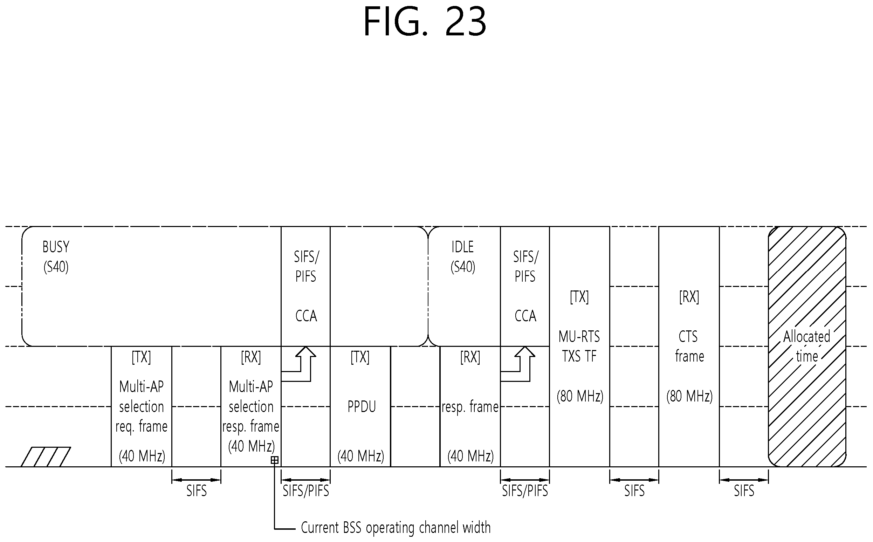

FIG. 23 shows an example of a bandwidth expansion procedure of an SAP when a backoff is not performed in Co-TDMA according to an embodiment of the present disclosure.

Referring to FIG. 23, an SAP having a BSS operating channel width (or, an available bandwidth) of 40 MHz may obtain information for the current BSS operating channel width (i.e., 80 MHz) of a DAP in a multi-AP selection procedure for selecting a DAP that is a target of a TXOP sharing (i.e., a procedure of transmitting/receiving a multi-AP selection request/response frame in FIG. 23). The SAP may perform a CCA on the available bandwidth of the DAP at SIFS/PIFS intervals until a scheduled TXOP sharing is performed, based on the information for the BSS operating channel width (or, available bandwidth) of the DAP. For example, immediately after receiving a multi-AP selection response frame, the SAP may perform a CCA on an operating channel width of the DAP excluding a BSS operating channel width of the SAP (i.e., 40 MHz including primary 20 MHz (P20) + secondary 20 MHz (S20)) during a SIFS/PIFS interval. In addition, even while performing an individual frame exchange with a STA in the BSS of the SAP, the SAP may perform a CCA on a secondary 40 MHz (S40) channel during a SIFS. Finally, when a subchannel(s) included in the BSS operating channel width of the DAP is determined to be in an idle state by performing a CCA during a SIFS/PIFS immediately before performing a scheduled TXOP sharing by the SAP, the SAP may transmit an MU-RTS TXS TF (or, a control frame/trigger frame) transmitted for a TXOP sharing through an expanded bandwidth (e.g., 80 MHz in FIG. 23).

At this time, a TXVECTOR parameter CH_BANDWIDTH (e.g., 80 MHz) of a PPDU including the MU-RTS TXS TF (or, control frame/trigger frame) transmitted by the SAP may have a value larger than a TXVECTOR parameter CH_BANDWIDTH (e.g., 40 MHz) of a PPDU previously delivered within a TXOP obtained by the SAP. For such a case, Rule 1) (and/or exceptions) below may be defined for a TXOP sharing in Co-TDMA:

Rule 1) A TXOP holder (i.e., SAP) may set a value of a TXVECTOR parameter CH_BANDWIDTH of a non-initial PPDU including an MU-RTS TXS TF (e.g., TXS mode = 1, 2, or a mode that can be newly defined for multi-AP coordination) for a TXOP sharing in Co-TDMA and/or a trigger frame that is newly defined for multi-AP coordination and can be transmitted to support a coordination-based transmission to the DAP, to be larger than a value of a TXVECTOR parameter CH_BANDWIDTH of a previous PPDU transmitted within the same TXOP.

Therefore, the SAP following Rule 1) described above may transmit an MU-RTS TXS TF (or a control frame/trigger frame) for a TXOP sharing based on a (sub)channel including a subchannel in an idle state identified by a CCA during a SIFS/PIFS on the subchannel performed until a time of the TXOP sharing (or through the corresponding (sub)channel). The DAP receiving the frame for a TXOP sharing may transmit a CTS frame (or a response frame) based on a channel width over which the corresponding frame is transmitted (or through the corresponding channel width). The SAP may identify a BSS operating channel width that will be actually used by the DAP during the allocated time as a channel width including the CTS frame transmitted as a response.

Therefore, the DAP may perform a frame exchange more quickly within the allocated time using the expanded available bandwidth (i.e., 80 MHz) without using a bandwidth equal to or smaller than the BSS operating channel width (i.e., 40 MHz) that was used by the SAP. At this time, it may be basically considered that a primary channel of the DAP is included within the BSS operating channel width of the SAP. Alternatively, the primary channels of the DAP and the SAP may be considered identical. When a TXOP return procedure is performed from the DAP within the allocated time (i.e., when a TXOP return frame for indicating a TXOP return to the SAP is transmitted), a PPDU including the corresponding TXOP return frame may follow at least one of the following options:

Option 1) A value of a TXVECTOR parameter CH_BANDWIDTH of a PPDU including a frame transmitted by the DAP to the SAP for a TXOP return (i.e., a TXOP return frame) must be set to the same value as the BSS operating channel width of the SAP, and the corresponding TXOP return frame must be included in a non-HT or non-HT duplicate PPDU.

Option 2) When a value of a TXVECTOR parameter CH_BANDWIDTH of a PPDU including a frame transmitted by the DAP to the SAP for a TXOP return (i.e., a TXOP return frame) is set to a value of the BSS operating channel width of the DAP, the corresponding TXOP return frame must be included in a non-HT duplicate PPDU.

When a remaining TXOP duration exists after the time that was allocated to the DAP within a TXOP duration, the SAP must perform a frame exchange using its existing BSS operating channel width (i.e., 40 MHz including P20 and S20 in FIG. 23).

### (2) With backoff

The SAP may obtain information for an available bandwidth of the DAP in a multi-AP selection procedure (or, polling/announcement, schedule announcement, and/or coordination announcement procedure), and jointly perform a backoff on a primary channel and a CCA on a subchannel to secure an expandable bandwidth (i.e., an available bandwidth of the DAP) before sharing a TXOP. The SAP performs a TXOP sharing by expanding to an available bandwidth in an idle state, and the DAP that has transmitted a response frame (e.g., a CTS frame) for a corresponding bandwidth may perform FE during the allocated time (or, allocation duration) through the expanded bandwidth.

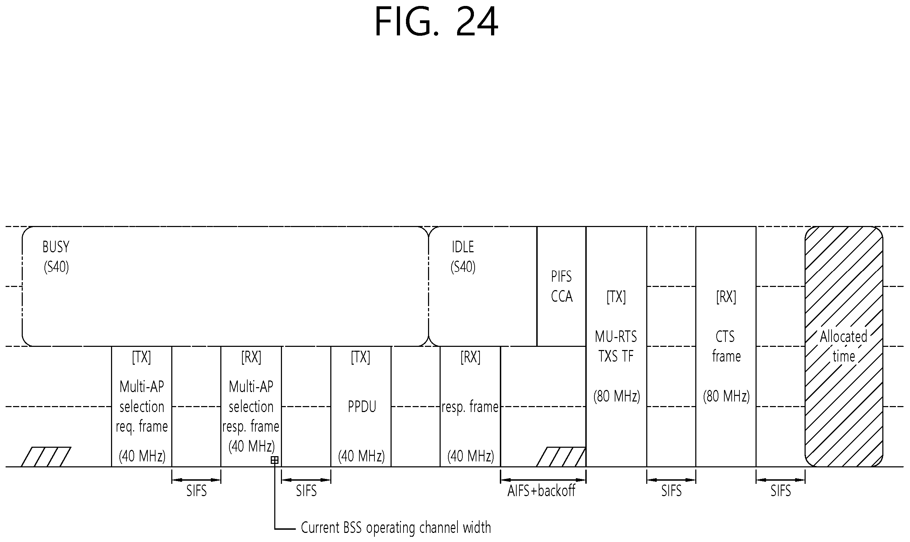

FIG. 24 shows an example of a bandwidth expansion procedure of an SAP when a backoff is performed in Co-TDMA according to an embodiment of the present disclosure.

Referring to FIG. 24, an SAP having a BSS operating channel width (or, an available bandwidth) of 40 MHz may obtain information for the current BSS operating channel width (i.e., 80 MHz) of a DAP in a multi-AP selection procedure for selecting a DAP that is a target of a TXOP sharing (i.e., a procedure of transmitting/receiving a multi-AP selection request/response frame in FIG. 23). Based on the information for the BSS operating channel width (or, available bandwidth) of the DAP, the SAP may perform i) a backoff on a primary channel, and ii) a CCA during a SIFS/PIFS on a subchannel before a scheduled TXOP sharing is performed, and when a subchannel(s) included in the BSS operating channel width of the DAP is determined to be in an idle state, the SAP may transmit an MU-RTS TXS TF (or, a control frame/trigger frame) transmitted for a TXOP sharing through an expanded bandwidth (e.g., 80 MHz in FIG. 24).

At this time, a TXVECTOR parameter CH_BANDWIDTH (e.g., 80 MHz) of a PPDU including the MU-RTS TXS TF (or, control frame/trigger frame) transmitted by the SAP may have a value larger than a TXVECTOR parameter CH_BANDWIDTH (e.g., 40 MHz) of a PPDU previously delivered within a TXOP obtained by the SAP. For such a case, Rule 1) (and/or exceptions) described above may be applied for a TXOP sharing in Co-TDMA.

Therefore, the SAP following Rule 1) described above may transmit an MU-RTS TXS TF (or a control frame/trigger frame) for a TXOP sharing based on a (sub)channel including a subchannel in an idle state identified by a backoff on a primary channel and a CCA during a SIFS/PIFS on a subchannel (or through the corresponding (sub)channel). The DAP receiving the frame for a TXOP sharing may transmit a CTS frame (or a response frame) based on a channel width over which the corresponding frame is transmitted (or through the corresponding channel width). The SAP may identify a BSS operating channel width that will be actually used by the DAP during the allocated time as a channel width including the CTS frame transmitted as a response.

Therefore, the DAP may perform a frame exchange more quickly within the allocated time using the expanded available bandwidth (i.e., 80 MHz) without using a bandwidth equal to or smaller than the BSS operating channel width (i.e., 40 MHz) that was used by the SAP. At this time, it may be basically considered that a primary channel of the DAP is included within the BSS operating channel width of the SAP. Alternatively, the primary channels of the DAP and the SAP may be considered identical. When a TXOP return procedure is performed from the DAP within the allocated time (i.e., when a TXOP return frame for indicating a TXOP return to the SAP is transmitted), a PPDU including the corresponding TXOP return frame may follow at least one of the following options:

Option 1) A value of a TXVECTOR parameter CH_BANDWIDTH of a PPDU including a frame transmitted by the DAP to the SAP for a TXOP return (i.e., a TXOP return frame) must be set to the same value as the BSS operating channel width of the SAP, and the corresponding TXOP return frame must be included in a non-HT or non-HT duplicate PPDU.

Option 2) When a value of a TXVECTOR parameter CH_BANDWIDTH of a PPDU including a frame transmitted by the DAP to the SAP for a TXOP return (i.e., a TXOP return frame) is set to a value of the BSS operating channel width of the DAP, the corresponding TXOP return frame must be included in a non-HT duplicate PPDU.

When a remaining TXOP duration exists after the time that was allocated to the DAP within a TXOP duration, the SAP must perform a frame exchange using its existing BSS operating channel width (i.e., 40 MHz including P20 and S20 in FIG. 24).

### 2. Method for supporting bandwidth expansion from aspect of DAP

### (1) Without backoff

The DAP may perform a CCA on an expandable bandwidth immediately after receiving an MU-RTS TXS TF (or a control frame/trigger frame) in a TXOP sharing procedure. The DAP may perform FE during the allocated time through a bandwidth including an expanded bandwidth by expanding to an available bandwidth in an idle state regardless of a BSS operating channel width of the MU-RTS TXS TF received from the SAP.

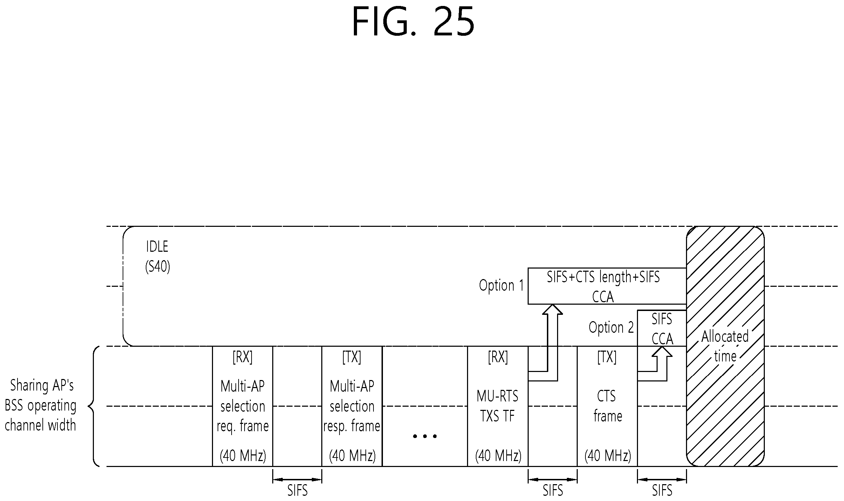

FIG. 25 shows a first example of a bandwidth expansion procedure of a DAP when a backoff is not performed in Co-TDMA according to an embodiment of the present disclosure.

Referring to FIG. 25, the SAP may have a BSS operating channel width of 40 MHz, and the DAP may have a BSS operating channel width of 80 MHz. The DAP may perform a bandwidth expansion according to Option 1) and/or Option 2) below:

Option 1) The DAP receiving an MU-RTS TXS TF (or a control frame/trigger frame) transmitted by an SAP for a TXOP sharing may perform a CCA on an available bandwidth not included in a BSS operating channel width of the SAP (e.g., S40 of FIG. 25) during "SIFS + length of a CTS frame (or a response frame) + SIFS". Through this, when a subchannel included in the BSS operating channel width of the DAP is determined to be in an idle state, the DAP may perform individual FE using an expanded bandwidth (e.g., 80 MHz including S40 in FIG. 25).

Option 2) The DAP that has transmitted a CTS frame (or a solicited response frame) for an MU-RTS TXS TF (or a control frame/trigger frame) transmitted by an SAP for a TXOP sharing may perform a CCA on an available bandwidth not included in a BSS operating channel width of the SAP (e.g., S40 of FIG. 25) during a SIFS/PIFS interval. Through this, when a subchannel included in the BSS operating channel width of the DAP is determined to be in an idle state, the DAP may perform individual FE using an expanded bandwidth (e.g., 80 MHz including S40 in FIG. 25).

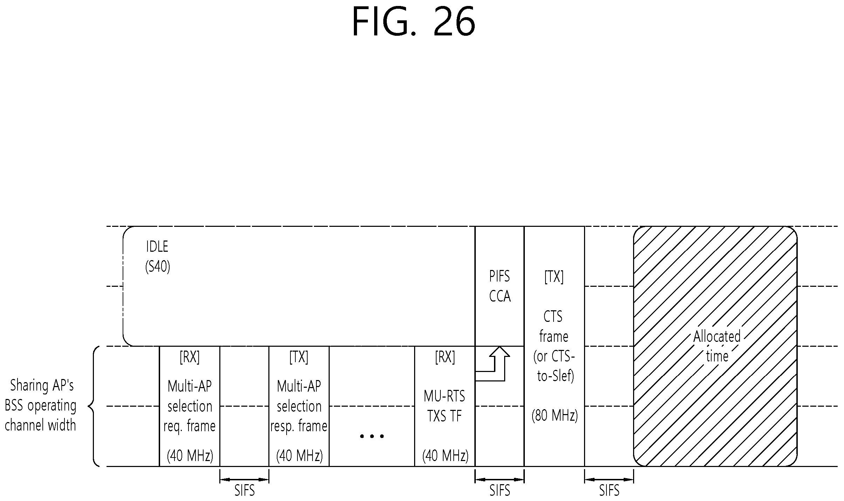

FIG. 26 shows a second example of a bandwidth expansion procedure of a DAP when a backoff is not performed in Co-TDMA according to an embodiment of the present disclosure.

Referring to FIG. 26, immediately after receiving an MU-RTS TXS TF in a TXOP sharing procedure, the DAP may perform a CCA on an expandable bandwidth during a SIFS/PIFS interval, and transmit a CTS frame (or, a CTS-to-self frame) through an expanded bandwidth to perform a reception response to the MU-RTS TXS TF. Additionally or alternatively, the CTS frame (or CTS-to-self frame) may be set to a value equal to or smaller than a value indicated in an allocation duration field in a user information field of the MU-RTS TXS TF for the purpose of protection. Through this, when a subchannel included in a BSS operating channel width of the DAP is determined to be in an idle state, the DAP may perform individual FE using the expanded bandwidth (e.g., 80 MHz including S40 in FIG. 26).

At this time, a TXVECTOR parameter CH_BANDWIDTH (e.g., 80 MHz) of a PPDU including an individual frame transmitted by the DAP during the allocated time (i.e., allocation duration) may have a value larger than a TXVECTOR parameter CH_BANDWIDTH (e.g., 40 MHz) of a PPDU previously delivered from the SAP within a TXOP obtained by the SAP (e.g., a multi-AP selection request frame and/or a PPDU including an MU-RTS TXS TF). For such a case, Rule 2) (and/or exceptions) below may be defined for a TXOP sharing in Co-TDMA:

Rule 2) A value of a TXVECTOR parameter CH_BANDWIDTH of a non-initial PPDU including a frame transmitted by a DAP (i.e., a TXOP responder) within a time allocated by an SAP in Co-TDMA may be set larger than a TXVECTOR parameter CH_BANDWIDTH value of a previous PPDU transmitted by a TXOP holder (i.e., SAP) within the same TXOP.

Therefore, the DAP following Rule 2) described above may perform a frame exchange more quickly within the allocated time through an expanded bandwidth including an available bandwidth determined to be an idle state by a CCA on a subchannel performed immediately after receiving the MU-RTS TXS TF. At this time, it may be basically considered that a primary channel of the DAP is included within a BSS operating channel width of the SAP. Alternatively, the primary channels of the DAP and the SAP may be considered identical. When a TXOP return procedure is performed from the DAP within the allocated time (i.e., when a TXOP return frame for indicating a TXOP return to the SAP is transmitted), a PPDU including the corresponding TXOP return frame may follow at least one of the following options:

Option 1) A value of a TXVECTOR parameter CH_BANDWIDTH of a PPDU including a frame transmitted by the DAP to the SAP for a TXOP return (i.e., a TXOP return frame) must be set to the same value as the BSS operating channel width of the SAP, and the corresponding TXOP return frame must be included in a non-HT or non-HT duplicate PPDU.

Option 2) When a value of a TXVECTOR parameter CH_BANDWIDTH of a PPDU including a frame transmitted by the DAP to the SAP for a TXOP return (i.e., a TXOP return frame) is set to a value of the BSS operating channel width of the DAP, the corresponding TXOP return frame must be included in a non-HT duplicate PPDU.

When a remaining TXOP duration exists after the time that was allocated to the DAP within a TXOP duration, the SAP must perform a frame exchange using its existing BSS operating channel width (i.e., 40 MHz including P20 and S20 in FIGS. 25 and 26).

### (2) With backoff

Following a TXOP sharing procedure, the DAP may jointly perform a backoff on a primary channel and a CCA on a subchannel to secure an expandable bandwidth before performing a frame exchange in an allocated time. The DAP may perform FE during the allocated time through a bandwidth including an expanded bandwidth to an available bandwidth in an idle state after transmitting a CTS frame (or a response frame) for an MU-RTS TXS TF (or a control frame/trigger frame), regardless of a BSS operating channel width of the MU-RTS TXS TF (or a control frame/trigger frame) received from the SAP.

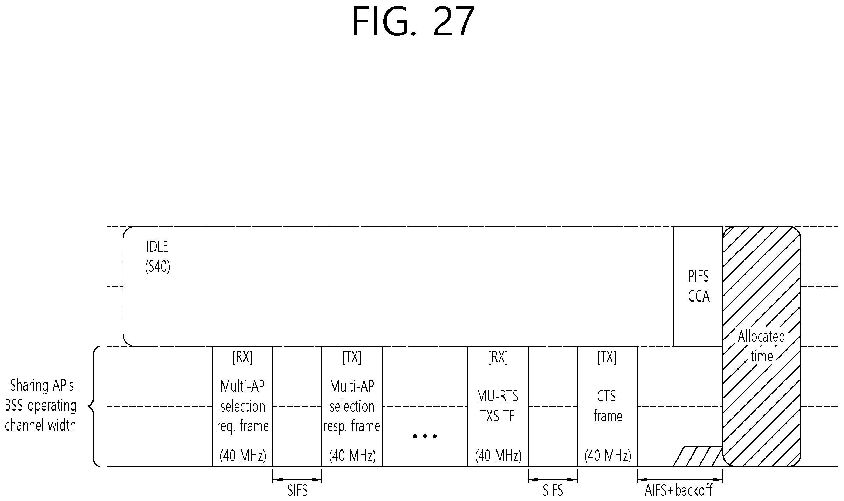

FIG. 27 shows an example of a bandwidth expansion procedure of a DAP when a backoff is performed in Co-TDMA according to an embodiment of the present disclosure.

Referring to FIG. 27, an SAP may have a BSS operating channel width of 40 MHz, and a DAP may have a BSS operating channel width of 80 MHz.

The DAP that has received an MU-RTS TXS TF (or a control frame/trigger frame) in a TXOP sharing procedure and transmitted a CTS frame (or, a response frame) for the MU-RTS TXS TF (or the control frame/trigger frame) may perform a backoff on a primary channel and a PIFS CCA on a subchannel. Through this, when a subchannel included in the BSS operating channel width of the DAP is determined to be in an idle state, the DAP may perform individual FE using an expanded bandwidth (e.g., 80 MHz including S40 in FIG. 27).

At this time, a TXVECTOR parameter CH_BANDWIDTH (e.g., 80 MHz) of a PPDU including an individual frame transmitted by the DAP may have a value larger than a TXVECTOR parameter CH_BANDWIDTH (e.g., 40 MHz) of a PPDU previously delivered from the SAP within a TXOP obtained by the SAP (e.g., a PPDU including a multi-AP selection request frame and/or an MU-RTS TXS TF). For such a case, Rule 2) (and/or exceptions) described above may be applied for a TXOP sharing in Co-TDMA.

Therefore, the DAP following Rule 2) described above may perform a frame exchange more quickly within the allocated time through an expanded bandwidth including an available bandwidth determined to be in an idle state by a backoff on a primary channel and a CCA during a SIFS/PIFS on a subchannel. At this time, it may be basically considered that a primary channel of the DAP is included within the BSS operating channel width of the SAP. Alternatively, the primary channels of the DAP and the SAP may be considered identical. When a TXOP return procedure is performed from the DAP within the allocated time (i.e., when a TXOP return frame for indicating a TXOP return to the SAP is transmitted), a PPDU including the corresponding TXOP return frame may follow at least one of the following options:

Option 1) A value of a TXVECTOR parameter CH_BANDWIDTH of a PPDU including a frame transmitted by the DAP to the SAP for a TXOP return (i.e., a TXOP return frame) must be set to the same value as the BSS operating channel width of the SAP, and the corresponding TXOP return frame must be included in a non-HT or non-HT duplicate PPDU.

Option 2) When a value of a TXVECTOR parameter CH_BANDWIDTH of a PPDU including a frame transmitted by the DAP to the SAP for a TXOP return (i.e., a TXOP return frame) is set to a value of the BSS operating channel width of the DAP, the corresponding TXOP return frame must be included in a non-HT duplicate PPDU.

When a remaining TXOP duration exists after the time that was allocated to the DAP within a TXOP duration, the SAP must perform a frame exchange using its existing BSS operating channel width (i.e., 40 MHz including P20 and S20 in FIG. 27).

### II. Bandwidth expansion in Co-TDMA based on two TXOPs

A method and apparatus for a bandwidth expansion upon a TXOP sharing in a Co-TDMA operation are provided. The Co-TDMA operation may include a Co-TDMA operation based on two TXOPs in which a TXOP holder changes when a TXOP sharing is performed.

### 1. Method for supporting bandwidth expansion upon MU-RTS TXS TF/CTS frame exchange

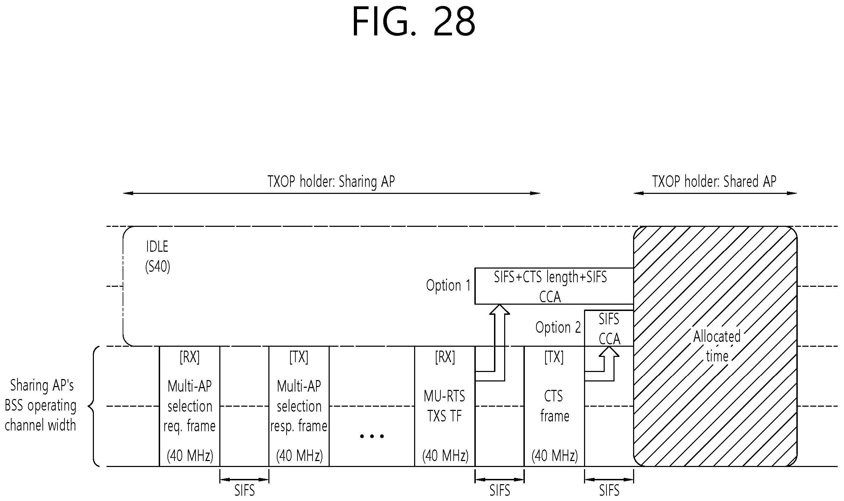

The DAP may perform a CCA on an expandable bandwidth immediately after receiving an MU-RTS TXS TF in a TXOP sharing procedure or immediately after transmitting a CTS frame as a response to the MU-RTS TXS TF. The DAP may perform FE during the allocated time (e.g., allocated time in FIG. 28) as a TXOP holder through an expanded bandwidth to an available bandwidth in an idle state regardless of the BSS operating channel width of the SAP.

FIG. 28 shows an example of a bandwidth expansion procedure upon an MU-RTS TXS TF/CTS frame exchange in Co-TDMA based on two TXOPs according to an embodiment of the present disclosure.

Referring to FIG. 28, an SAP may have a BSS operating channel width of 40 MHz, and a DAP may have a BSS operating channel width of 80 MHz. The DAP receiving an MU-RTS TXS TF transmitted by the SAP for a TXOP sharing may perform a CCA on an available bandwidth not included in the BSS operating channel width of the SAP (e.g., S40 of FIG. 28).

At this time, a starting point and a CCA interval of the CCA may be like Option 1) and/or Option 2) below:
Option 1) The DAP may identify/occupy an idle channel by performing a CCA during an interval of "SIFS + PPDU length of a CTS frame + SIFS", which is from a time of receiving the MU-RTS TXS TF from the SAP to a time before the allocated time starts.

Option 2) The DAP may identify/occupy an idle channel by performing a CCA during a SIFS interval immediately after transmitting a CTS frame for the MU-RTS TXS TF transmitted from the SAP.

When a subchannel included in the BSS operating channel width of the DAP is determined to be in an idle state based on the CCA method such as Option 1) and/or Option 2), the DAP may perform individual FE using an expanded bandwidth (e.g., 80 MHz including S40 in FIG. 28).

At this time, since the DAP performs FE as a TXOP holder, a value of a TXVECTOR parameter CH_BANDWIDTH of a PPDU including a frame transmitted by the DAP may not be less than or equal to a value of a TXVECTOR parameter CH_BANDWIDTH of a PPDU transmitted within a TXOP obtained by the SAP.

Therefore, the DAP may perform a frame exchange more quickly within the allocated time through an expanded bandwidth including an available bandwidth in an idle state by the CCA on a subchannel performed in the TXOP sharing procedure. At this time, it may be basically considered that a primary channel of the DAP is included within the BSS operating channel width of the SAP. When a TXOP return procedure is performed from the DAP within the allocated time (i.e., when the DAP transmits a TXOP return frame for a TXOP return to the SAP), a PPDU including the corresponding TXOP return frame may follow at least one of the following options:

Option 1) A value of a TXVECTOR parameter CH_BANDWIDTH of a PPDU including a frame transmitted by the DAP to the SAP for a TXOP return (i.e., a TXOP return frame) must be set to the same value as the BSS operating channel width of the SAP, and the corresponding TXOP return frame must be included in a non-HT or non-HT duplicate PPDU.

Option 2) When a value of a TXVECTOR parameter CH_BANDWIDTH of a PPDU including a frame transmitted by the DAP to the SAP for a TXOP return (i.e., a TXOP return frame) is set to a value of the BSS operating channel width of the DAP, the corresponding TXOP return frame must be included in a non-HT duplicate PPDU.

When a remaining TXOP duration exists after the time that was allocated to the DAP within a TXOP duration, the SAP must perform a frame exchange using its existing BSS operating channel width (i.e., 40 MHz including P20 and S20 in FIG. 28).

### 2. Method for supporting bandwidth expansion upon MU-RTS TXS TF/CTS-to-self frame exchange

### (1) Bandwidth expansion method of DAP

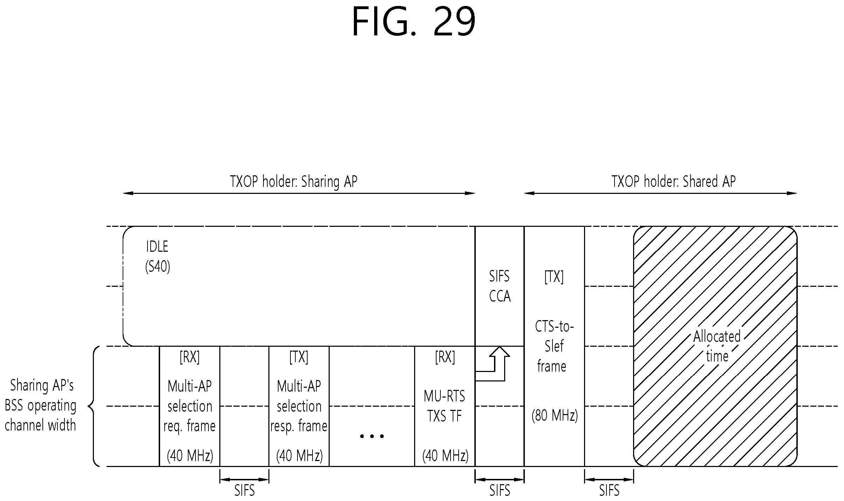

The DAP may perform a CCA on an expandable bandwidth immediately after receiving an MU-RTS TXS TF in a TXOP sharing procedure, and perform a response for the MU-RTS TXS TF and/or NAV setting sequence by transmitting a CTS-to-Self frame through an expanded bandwidth. The DAP may perform FE during the allocated time (e.g., allocated time in FIG. 29) as a TXOP holder through an expanded bandwidth up to an available bandwidth in an idle state regardless of the BSS operating channel width of the SAP.

FIG. 29 shows an example of a bandwidth expansion procedure of a DAP upon an MU-RTS TXS TF/CTS-to-self frame exchange in Co-TDMA based on two TXOPs according to an embodiment of the present disclosure.

Referring to FIG. 29, an SAP may have a BSS operating channel width of 40 MHz, and a DAP may have a BSS operating channel width of 80 MHz. The DAP receiving an MU-RTS TXS TF transmitted by the SAP for a TXOP sharing may perform a CCA on an available bandwidth not included in the BSS operating channel width of the SAP (e.g., S40 of FIG. 29) during a SIFS.

Through this, when a subchannel included in the BSS operating channel width of the DAP is determined to be in an idle state, the DAP may perform individual FE using an expanded bandwidth (e.g., 80 MHz including S40 in FIG. 29).

At this time, since the DAP performs FE as a TXOP holder, a value of a TXVECTOR parameter CH_BANDWIDTH of a PPDU including a frame transmitted by the DAP may not be less than or equal to a value of a TXVECTOR parameter CH_BANDWIDTH of a PPDU transmitted within a TXOP obtained by the SAP.

Therefore, the DAP may perform a frame exchange more quickly within the allocated time through an expanded bandwidth including an available bandwidth in an idle state by the CCA on a subchannel performed in the TXOP sharing procedure. In addition, a response for receiving an MU-RTS TXS TF and a process for setting a NAV may be performed by transmitting a CTS-to-self frame. At this time, a primary channel of the DAP may be basically considered to be included within the BSS operating channel width of the SAP, and the CTS-to-self frame may be included in a non-HT duplicate PPDU. When a TXOP return procedure is performed from the DAP within the allocated time (i.e., when the DAP transmits a TXOP return frame for a TXOP return to the SAP), a PPDU including the corresponding TXOP return frame may follow at least one of the following options:
Option 1) A value of a TXVECTOR parameter CH_BANDWIDTH of a PPDU including a frame transmitted by the DAP to the SAP for a TXOP return (i.e., a TXOP return frame) must be set to the same value as the BSS operating channel width of the SAP, and the corresponding TXOP return frame must be included in a non-HT or non-HT duplicate PPDU.

Option 2) When a value of a TXVECTOR parameter CH_BANDWIDTH of a PPDU including a frame transmitted by the DAP to the SAP for a TXOP return (i.e., a TXOP return frame) is set to a value of the BSS operating channel width of the DAP, the corresponding TXOP return frame must be included in a non-HT duplicate PPDU.

When a remaining TXOP duration exists after the time that was allocated to the DAP within a TXOP duration, the SAP must perform a frame exchange using its existing BSS operating channel width (i.e., 40 MHz including P20 and S20 in FIG. 29).

### (2) Bandwidth expansion method of SAP

The SAP may identify an available bandwidth of the DAP in a multi-AP selection procedure, and perform a TXOP sharing by performing Option 1) a backoff on a primary channel and a CCA on a subchannel, or Option 2) only a CCA on a subchannel in order to occupy an expandable bandwidth (i.e., an available bandwidth of the DAP/a BSS operating channel width of the DAP) before sharing a TXOP. When sharing the TXOP, the SAP may transmit an MU-RTS TXS TF through an expanded bandwidth up to an available bandwidth in an idle state, and the DAP that has transmitted a CTS-to-Self frame for the corresponding bandwidth may perform FE during the allocated time through the corresponding expanded bandwidth.

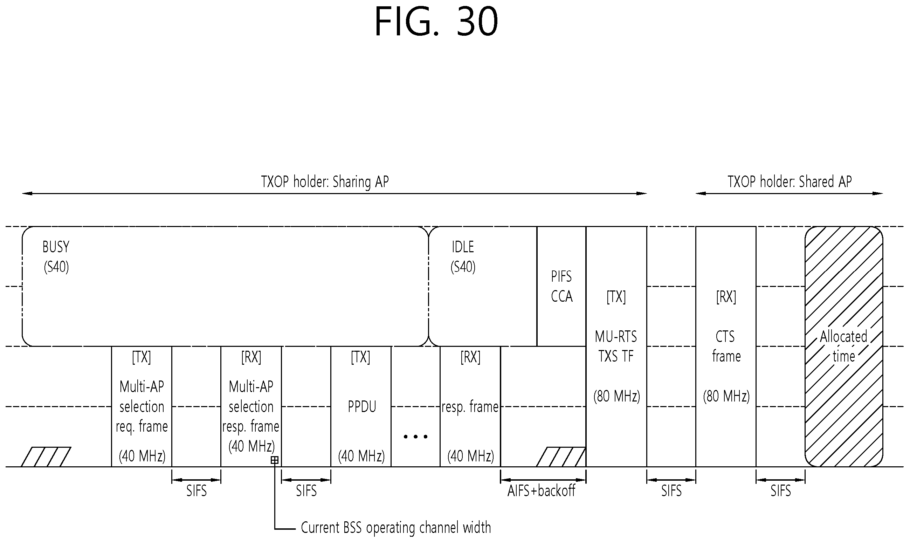

FIG. 30 shows an example of a bandwidth expansion procedure of a DAP when a backoff is performed in Co-TDMA based on two TXOPs according to an embodiment of the present disclosure.

Referring to FIG. 30, an SAP having a BSS operating channel width of 40 MHz may obtain information for the current BSS operating channel width (i.e., 80 MHz) of a DAP in a multi-AP selection procedure for selecting a DAP that is a target of a TXOP sharing (i.e., a process of transmitting/receiving a multi-AP selection request/response frame in FIG. 30). Based on the information for the BSS operating channel width of the DAP, the SAP may perform a backoff on a primary channel and perform a CCA on a subchannel during a SIFS/PIFS before a scheduled TXOP sharing, and when a subchannel included in the BSS operating channel width of the DAP is in an idle state, the SAP may transmit an MU-RTS TXS TF for a TXOP sharing through an expanded bandwidth (i.e., 80 MHz in FIG. 30).

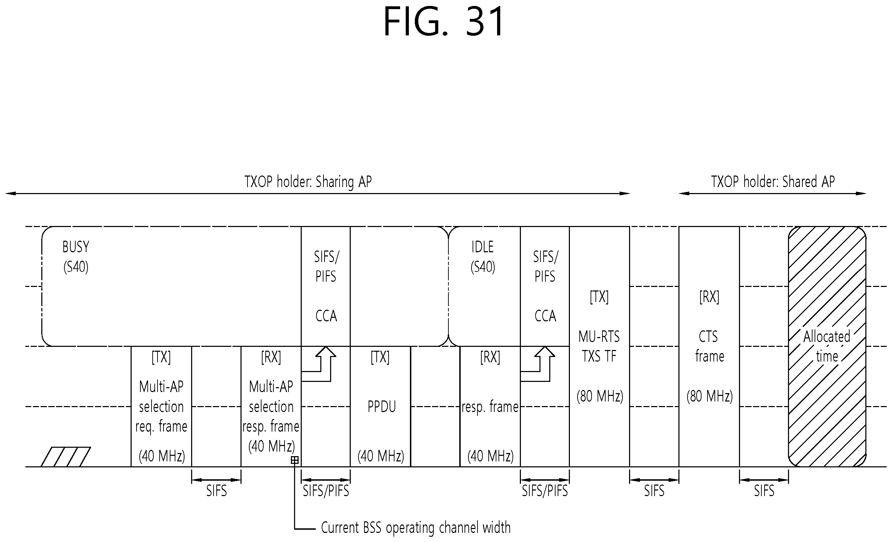

FIG. 31 shows an example of a bandwidth expansion procedure of a DAP when a backoff is not performed in Co-TDMA based on two TXOPs according to an embodiment of the present disclosure.

Referring to FIG. 31, similarly to the case of performing a backoff, the SAP may obtain information for a BSS operating bandwidth of the current DAP in a multi-AP selection procedure. Based on the information for the BSS operating bandwidth of the DAP, the SAP may perform a CCA on the available bandwidth of the DAP (i.e., the BSS operating bandwidth of the DAP) at SIFS/PIFS intervals before a scheduled TXOP sharing is performed. For example, the SAP may perform a CCA on a BSS operating channel width of the DAP excluding a BSS operating channel width of the SAP (i.e., 40 MHz including P20+S20) during a SIFS/PIFS interval immediately after receiving a multi-AP selection response frame. In addition, the SAP may perform a CCA on an S40 channel during a SIFS even when performing an individual frame exchange with a STA within the BSS of the SAP. Finally, when a subchannel included in the BSS operating channel width of the DAP is determined to be in an idle state by performing a CCA during a SIFS/PIFS before a scheduled TXOP sharing is performed by the SAP, the SAP may transmit an MU-RTS TXS TF through an expanded bandwidth (i.e., 80 MHz in FIG. 31) for a TXOP sharing.

The DAP receiving the MU-RTS TXS TF transmitted through the method illustrated in Option 1) (or, FIG. 30) and/or Option 2) (or, FIG. 31) may transmit a CTS-to-Self frame through a channel width over which the MU-RTS TXS TF is transmitted. The SAP may identify a BSS operating channel width that the DAP will actually use during the allocated time as a channel width including the CTS-to-Self frame transmitted as a response.

At this time, since the DAP performs FE as a TXOP holder, a value of a TXVECTOR parameter CH_BANDWIDTH of a PPDU including a frame transmitted by the DAP may not be less than or equal to a value of a TXVECTOR parameter CH_BANDWIDTH of a PPDU transmitted within a TXOP obtained by the SAP.

Therefore, the DAP may perform a frame exchange more quickly within the allocated time using a bandwidth including an expanded bandwidth, without using a bandwidth equal to or smaller than a BSS operating channel width used by the SAP. In addition, a response for receiving an MU-RTS TXS TF and a process for setting a NAV may be performed by transmitting a CTS-to-self frame. At this time, a primary channel of the DAP may be basically considered to be included within the BSS operating channel width of the SAP, and the CTS-to-self frame may be included in a non-HT duplicate PPDU. When a TXOP return procedure is performed from the DAP within the allocated time (i.e., when the DAP transmits a TXOP return frame for a TXOP return to the SAP), a PPDU including the corresponding TXOP return frame may follow at least one of the following options:
Option 1) A value of a TXVECTOR parameter CH_BANDWIDTH of a PPDU including a frame transmitted by the DAP to the SAP for a TXOP return (i.e., a TXOP return frame) must be set to the same value as the BSS operating channel width of the SAP, and the corresponding TXOP return frame must be included in a non-HT or non-HT duplicate PPDU.

Option 2) When a value of a TXVECTOR parameter CH_BANDWIDTH of a PPDU including a frame transmitted by the DAP to the SAP for a TXOP return (i.e., a TXOP return frame) is set to a value of the BSS operating channel width of the DAP, the corresponding TXOP return frame must be included in a non-HT duplicate PPDU.

When a remaining TXOP duration exists after the time that was allocated to the DAP within a TXOP duration, the SAP must perform a frame exchange using its existing BSS operating channel width (i.e., 40 MHz including P20 and S20 in FIGS. 30 and 31).

In the present disclosure, a bandwidth expansion method/apparatus for a DAP receiving a TXOP shared from an SAP in a Co-TDMA operation is provided. Specifically, a method/apparatus for an SAP to support a bandwidth expansion and a method/apparatus for a DAP to support a bandwidth expansion are provided.

According to a bandwidth expansion method by an SAP, the SAP may perform a CCA at SIFS/PIFS intervals to evaluate whether a subchannel is in an idle state, and may share a TXOP based on a result of the evaluation. Alternatively, the SAP may evaluate whether channels are in an idle state by performing a backoff on a primary channel and a CCA on a subchannel together, and may share a TXOP based on a result of the evaluation.

According to a bandwidth expansion method by a DAP, the DAP may evaluate whether a subchannel is in an idle state in a TXOP sharing process, or evaluate whether channels are in an idle state by performing a backoff on a primary channel and a CCA on a subchannel together before an allocated time.

Through the bandwidth expansion methods proposed in the present disclosure, the DAP may quickly perform a frame exchange using an expanded bandwidth during an allocated time.

In addition, in the present disclosure, a bandwidth expansion method/apparatus for a DAP receiving a TXOP shared from an SAP in a two TXOP-based Co-TDMA operation in which a TXOP holder is changed is provided. For example, a bandwidth expansion method/apparatus based on an exchange of MU-RTS TXS TF/CTS frames and a bandwidth expansion method/apparatus based on an exchange of MU-RTS TXS TF/CTS-to-Self frames are provided.

According to a bandwidth expansion method based on an exchange of MU-RTS TXS TF/CTS frames, a DAP may perform a CCA from immediately after receiving an MU-RTS TXS TF or from immediately after transmitting a CTS frame, and may determine whether a subchannel is in an idle state based on a CCA.

According to a bandwidth expansion method based on an exchange of MU-RTS TXS TF/CTS-to-Self frames, a DAP may perform a CCA, or an SAP may perform a CCA as described above.

Through the bandwidth expansion methods proposed in the present disclosure, the DAP may quickly perform a frame exchange using an expanded bandwidth during an allocated time.

The technical features of the present disclosure described above can be applied to various devices and methods. For example, the technical features of the present disclosure described above can be performed/supported by the devices of FIG. 1 and/or FIG. 5. For example, the technical features of the present disclosure described above can be applied only to a part of FIG. 1 and/or FIG. 5. For example, the technical features of the present disclosure described above can be implemented based on the processing chips 114, 124 of FIG. 1, or implemented based on the processors 111, 121 and the memories 112, 122 of FIG. 1, or implemented based on the processor 510 and the memory 520 of FIG. 5.

For example, the processor 121 and/or processing chip 124 of FIG. 1 may be configured to execute instructions stored in the memory 122 to perform operations performed by the first AP in the present disclosure. The operations comprise: receiving, from a second AP, information for an available bandwidth of the second AP; transmitting, to the second AP, information for an available bandwidth of the first AP, wherein the available bandwidth of the first AP is larger than the available bandwidth of the second AP; receiving, from the second AP, a TXOP sharing frame comprising information for an allocation duration within a duration of a transmission opportunity (TXOP) obtained for the available bandwidth of the second AP; and based on at least one subchannel other than the available bandwidth of the second AP being in an idle state within the available bandwidth of the first AP, transmitting a frame in the allocation duration through an expanded bandwidth comprising the at least one subchannel and the available bandwidth of the second AP for which the TXOP is obtained.

For example, the processor 111, the processing chip 114 of FIG. 1 and/or the processor 510 of FIG. 5 may be configured to execute instructions stored in the memory 112, 520 to perform operations performed by the second AP in the present disclosure. The operations comprise: transmitting, to a first AP, information for an available bandwidth of the second AP; receiving, from the first AP, information for an available bandwidth of the first AP, wherein the available bandwidth of the first AP is larger than the available bandwidth of the second AP; determining whether at least one subchannel other than the available bandwidth of the second AP is in an idle state within the available bandwidth of the first AP; and based on the at least one subchannel being in an idle state, transmitting, to the first AP, a TXOP sharing frame comprising information for an allocation duration within a duration of a transmission opportunity (TXOP) obtained for the available bandwidth of the second AP through an expanded bandwidth comprising the at least one subchannel and the available bandwidth of the second AP.

The technical features of the present disclosure can be implemented based on a computer readable medium (CRM) (e.g., non-transitory CRM). For example, the CRM in the present disclosure may comprise at least one CRM having stored thereon a program code implementing instructions executed by at least one processor.

For example, the CRM may be the memory 122 of FIG. 1 and/or a separate external memory/storage medium/disk. The CRM may store instructions that perform operations performed by the first AP in the present disclosure based on being executed by a processor (e.g., the processor 121 and/or the processing chip 124 of FIG. 1). The operations comprise: receiving, from a second AP, information for an available bandwidth of the second AP; transmitting, to the second AP, information for an available bandwidth of the first AP, wherein the available bandwidth of the first AP is larger than the available bandwidth of the second AP; receiving, from the second AP, a TXOP sharing frame comprising information for an allocation duration within a duration of a transmission opportunity (TXOP) obtained for the available bandwidth of the second AP; and based on at least one subchannel other than the available bandwidth of the second AP being in an idle state within the available bandwidth of the first AP, transmitting a frame in the allocation duration through an expanded bandwidth comprising the at least one subchannel and the available bandwidth of the second AP for which the TXOP is obtained.

For example, the CRM may be the memory 112 of FIG. 1, the memory 520 of FIG. 5, and/or a separate external memory/storage medium/disk. The CRM may store instructions that perform operations performed by the second AP in the present disclosure based on being executed by a processor (e.g., the processor 111, the processing chip 114 of FIG. 1, and/or the processor 510 of FIG. 5). The operations comprise: transmitting, to a first AP, information for an available bandwidth of the second AP; receiving, from the first AP, information for an available bandwidth of the first AP, wherein the available bandwidth of the first AP is larger than the available bandwidth of the second AP; determining whether at least one subchannel other than the available bandwidth of the second AP is in an idle state within the available bandwidth of the first AP; and based on the at least one subchannel being in an idle state, transmitting, to the first AP, a TXOP sharing frame comprising information for an allocation duration within a duration of a transmission opportunity (TXOP) obtained for the available bandwidth of the second AP through an expanded bandwidth comprising the at least one subchannel and the available bandwidth of the second AP.

The foregoing technical features of this disclosure are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The present disclosure may have various advantageous effects.

For example, through the bandwidth expansion methods proposed in the present disclosure, the DAP may quickly perform a frame exchange using the expanded bandwidth during the allocated time.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus, and technical features in method claim(s) and apparatus claim(s) can be combined to be implemented or performed in a method.

## Claims

1. A method comprising:
receiving, by a first access point (AP) from a second AP, information for an available bandwidth of the second AP;
transmitting, by the first AP to the second AP, information for an available bandwidth of the first AP,
wherein the available bandwidth of the first AP is larger than the available bandwidth of the second AP;
receiving, by the first AP from the second AP, a TXOP sharing frame comprising information for an allocation duration within a duration of a transmission opportunity (TXOP) obtained for the available bandwidth of the second AP; and
based on at least one subchannel other than the available bandwidth of the second AP being in an idle state within the available bandwidth of the first AP, transmitting, by the first AP, a frame in the allocation duration through an expanded bandwidth comprising the at least one subchannel and the available bandwidth of the second AP for which the TXOP is obtained.

2. The method of claim 1, wherein before the TXOP sharing frame is transmitted, a clear channel assessment (CCA) is performed on the at least one subchannel, and
wherein the TXOP sharing frame is received through the expanded bandwidth, based on a result of the CCA being an idle state.

3. The method of claim 2, wherein the CCA is performed during a short interframe space (SIFS) or a priority interframe space (PIFS).

4. The method of claim 2, further comprising transmitting, by the first AP to the second AP, a response frame to the TXOP sharing frame through the expanded bandwidth after receiving the TXOP sharing frame through the expanded bandwidth.

5. The method of claim 2, wherein a value of a channel bandwidth parameter of a physical layer protocol data unit (PPDU) comprising the TXOP sharing frame received by the first AP through the expanded bandwidth is set larger than a value of a channel bandwidth parameter of a PPDU comprising a frame transmitted by the second AP through the available bandwidth of the second AP before the TXOP sharing frame.

6. The method of claim 1, further comprising performing, by the first AP, a clear channel assessment (CCA) on the at least one subchannel after receiving the TXOP sharing frame,
wherein the transmitting of the frame in the allocation duration through the expanded bandwidth comprises transmitting the frame in the allocation duration through the expanded bandwidth based on a result of the CCA being an idle state.

7. The method of claim 6, further comprising transmitting, by the first AP to the second AP, a response frame to the TXOP sharing frame through the available bandwidth of the second AP after receiving the TXOP sharing frame.

8. The method of claim 7, wherein the CCA is performed during a short interframe space (SIFS) after the TXOP sharing frame is received, a duration in which the response frame is transmitted, and a SIFS after the response frame is transmitted.

9. The method of claim 7, wherein the CCA is performed during a short interframe space (SIFS) after the response frame is transmitted.

10. The method of claim 6, wherein the CCA is performed during a short interframe space (SIFS) after the TXOP sharing frame is received, and
based on a result of the CCA being an idle state, further comprising transmitting, by the first AP to the second AP, a response frame to the TXOP sharing frame through the expanded bandwidth.

11. The method of claim 1, wherein a value of a channel bandwidth parameter of a physical layer protocol data unit (PPDU) comprising a frame transmitted by the first AP through the expanded bandwidth is set larger than a value of a channel bandwidth parameter of a PPDU comprising a frame transmitted by the second AP through the available bandwidth of the second AP.

12. The method of claim 1, wherein a clear channel assessment (CCA) is performed on the at least one subchannel, and
wherein a backoff is performed on the available bandwidth of the second AP.

13. The method of claim 12, wherein the transmitting of the frame in the allocation duration through the expanded bandwidth comprises transmitting the frame in the allocation duration through the expanded bandwidth based on a result of the CCA and the backoff being an idle state.

14. The method of claim 12, wherein the CCA and the backoff are performed before the TXOP sharing frame is transmitted,
and
wherein the TXOP sharing frame is received through the expanded bandwidth, based on a result of the CCA and the backoff being an idle state.

15. The method of claim 12, further comprising performing the CCA and the backoff after transmitting a response frame to the TXOP sharing frame through the available bandwidth of the second AP.

16. A first access point (AP) comprising:
a transceiver;
a memory; and
at least one processor operatively coupled to the transceiver and the memory,
wherein the memory stores instructions that, based on being executed by the at least one processor, perform operations comprising:
receiving, from a second AP, information for an available bandwidth of the second AP;
transmitting, to the second AP, information for an available bandwidth of the first AP,
wherein the available bandwidth of the first AP is larger than the available bandwidth of the second AP;
receiving, from the second AP, a TXOP sharing frame comprising information for an allocation duration within a duration of a transmission opportunity (TXOP) obtained for the available bandwidth of the second AP; and
based on at least one subchannel other than the available bandwidth of the second AP being in an idle state within the available bandwidth of the first AP, transmitting a frame in the allocation duration through an expanded bandwidth comprising the at least one subchannel and the available bandwidth of the second AP for which the TXOP is obtained.

17. An apparatus comprising:
at least one processor; and
at least one memory operatively coupled to the at least one processor,
wherein the at least one memory stores instructions that, based on being executed by the at least one processor, perform operations comprising:
receiving, from a second AP, information for an available bandwidth of the second AP;
transmitting, to the second AP, information for an available bandwidth of the first AP,
wherein the available bandwidth of the first AP is larger than the available bandwidth of the second AP;
receiving, from the second AP, a TXOP sharing frame comprising information for an allocation duration within a duration of a transmission opportunity (TXOP) obtained for the available bandwidth of the second AP; and
based on at least one subchannel other than the available bandwidth of the second AP being in an idle state within the available bandwidth of the first AP, transmitting a frame in the allocation duration through an expanded bandwidth comprising the at least one subchannel and the available bandwidth of the second AP for which the TXOP is obtained.

18. A non-transitory computer readable medium (CRM) having stored thereon a program code implementing instructions that, based on being executed by at least one processor, perform operations comprising:
receiving, from a second AP, information for an available bandwidth of the second AP;
transmitting, to the second AP, information for an available bandwidth of the first AP,
wherein the available bandwidth of the first AP is larger than the available bandwidth of the second AP;
receiving, from the second AP, a TXOP sharing frame comprising information for an allocation duration within a duration of a transmission opportunity (TXOP) obtained for the available bandwidth of the second AP; and
based on at least one subchannel other than the available bandwidth of the second AP being in an idle state within the available bandwidth of the first AP, transmitting a frame in the allocation duration through an expanded bandwidth comprising the at least one subchannel and the available bandwidth of the second AP for which the TXOP is obtained.

19. A method comprising:
transmitting, by a second access point (AP) to a first AP, information for an available bandwidth of the second AP;
receiving, by the second AP from the first AP, information for an available bandwidth of the first AP,
wherein the available bandwidth of the first AP is larger than the available bandwidth of the second AP;
determining, by the second AP, whether at least one subchannel other than the available bandwidth of the second AP is in an idle state within the available bandwidth of the first AP; and
based on the at least one subchannel being in an idle state, transmitting, by the second AP to the first AP, a TXOP sharing frame comprising information for an allocation duration within a duration of a transmission opportunity (TXOP) obtained for the available bandwidth of the second AP through an expanded bandwidth comprising the at least one subchannel and the available bandwidth of the second AP.

20. A second access point (AP) comprising:
a transceiver;
a memory; and
at least one processor operatively coupled to the transceiver and the memory,
wherein the memory stores instructions that, based on being executed by the at least one processor, perform operations comprising:
transmitting, to a first AP, information for an available bandwidth of the second AP;
receiving, from the first AP, information for an available bandwidth of the first AP,
wherein the available bandwidth of the first AP is larger than the available bandwidth of the second AP;
determining whether at least one subchannel other than the available bandwidth of the second AP is in an idle state within the available bandwidth of the first AP; and
based on the at least one subchannel being in an idle state, transmitting, to the first AP, a TXOP sharing frame comprising information for an allocation duration within a duration of a transmission opportunity (TXOP) obtained for the available bandwidth of the second AP through an expanded bandwidth comprising the at least one subchannel and the available bandwidth of the second AP.
